# EUROPÄISCHE PATENTANMELDUNG

(11) **EP 4 438 249 A1**
(43) Veröffentlichungstag der Anmeldung: **02.10.2024**
(21) Anmeldenummer: 24163787.5
(22) Anmeldetag: 15.03.2024
(51) Int. Cl.: B25J 15/02

(54) **GREIFVORRICHTUNG, GREIFSYSTEM, HANDHABUNGSEINRICHTUNG UND VERFAHREN**

(30) Priorität: 27.03.2023 DE 102023107664
(71) Anmelder: Groninger GmbH & Co. KG, 91625 Schnelldorf (DE)
(72) Erfinder: Hofmann, Hannes Wilhelm, 74597 Stimpfach-Rechenberg (DE)
(74) Vertreter: Witte, Weller & Partner Patentanwälte mbB

(57) **Zusammenfassung**

Die vorliegende Erfindung betrifft eine Greifvorrichtung (10) zum Greifen eines Objekts, insbesondere eines kosmetischen oder pharmazeutischen Objekts, wobei die Greifvorrichtung (10) mindestens zwei Greifelemente (12) und ein Bewegungsteil (14) aufweist, wobei zumindest eines der Greifelemente (12) bewegbar ist, wobei das Bewegungsteil (14) magnetisch bewegbar ist, wobei das Bewegungsteil (14) mit dem zumindest einen bewegbaren Greifelement (12) derart gekoppelt ist, dass eine Bewegung des Bewegungsteils (14) auf eine Bewegung des zumindest einen bewegbaren Greifelements (12) übertragbar ist. Des Weiteren betrifft die vorliegende Erfindung ein Greifsystem (40). Des Weiteren betrifft die vorliegende Erfindung eine Handhabungseinrichtung (60). Des Weiteren betrifft die vorliegende Erfindung ein Verfahren (80) zum Herstellen einer Greifvorrichtung (10). Des Weiteren betrifft die vorliegende Erfindung ein Verfahren (100) zum Handhaben von Objekten, insbesondere von kosmetischen oder pharmazeutischen Objekten.

## Beschreibung

Die vorliegende Erfindung betrifft eine Greifvorrichtung zum Greifen eines Objekts, insbesondere eines kosmetischen oder pharmazeutischen Objekts. Des Weiteren betrifft die vorliegende Erfindung ein Greifsystem. Des Weiteren betrifft die vorliegende Erfindung eine Handhabungseinrichtung. Des Weiteren betrifft die vorliegende Erfindung ein Verfahren zum Herstellen einer Greifvorrichtung. Des Weiteren betrifft die vorliegende Erfindung ein Verfahren zum Handhaben von Objekten.

Greifvorrichtungen sind im Stand der Technik allgemein bekannt.

Greifvorrichtungen dienen grundsätzlich dazu, Objekte zu greifen. Dazu können Greifvorrichtungen zum Beispiel mehrere, insbesondere zwei, Greifelemente aufweisen. Die Greifelemente können zum Greifen eines Objekts aufeinander zu bewegt werden, um dadurch ein Objekt zu greifen, das zwischen den Greifelementen angeordnet ist. Greifvorrichtungen können auch als Greifwerkzeug bezeichnet werden.

Derartige Greifvorrichtung können zum Beispiel in der kosmetischen und pharmazeutischen Industrie zum Greifen von Behältern eingesetzt werden, insbesondere innerhalb von kosmetischen oder pharmazeutischen Abfüllanlagen. In kosmetischen oder pharmazeutischen Abfüllanlagen ist es bekannt, Handhabungseinrichtungen, wie beispielsweise Handhabungsroboter, zum Handhaben von Objekten, wie beispielsweise Behältern, zu verwenden. Derartige Handhabungseinrichtungen können einen mehrachsigen Arm und einen Endeffektor an einem Ende des Arms aufweisen. Der Endeffektor kann eine Greifvorrichtung zum Greifen der Objekte aufweisen. Mittels des mehrachsigen Arms können mit der Greifvorrichtung gegriffene Objekte im Raum bewegt werden.

Bei Anwendungen im kosmetischen oder pharmazeutischen Bereich kann es erforderlich sein, dass Objekte mit unterschiedlicher Form und Größe gehandhabt werden müssen. Beispielsweise können in kosmetischen oder pharmazeutischen Abfüllanlagen unterschiedliche Behälter mit kosmetischen oder pharmazeutischen Substanzen befüllt werden. Zum Handhaben von Objekten mit unterschiedlicher Form und Größe ist es vorteilhaft, entsprechende Greifwerkzeuge zu verwenden, die an die entsprechende Form und Größe der Behälter angepasst sind.

Zum Handhaben einer Mehrzahl von Objekten mit unterschiedlicher Form und Größe ist es beispielsweise bekannt, mehrere Handhabungseinrichtungen mit unterschiedlichen Greifwerkzeugen bereitzustellen. Diese Lösung ist aber recht aufwendig und nicht platzsparend.

Des Weiteren sind auch Endeffektoren bekannt, die Greifvorrichtungen zum Greifen von Objekten mit unterschiedlicher Form und Größe aufweisen. Beispielsweise zeigt die Druckschrift DE 10 2020 102 761 A1 einen Endeffektor zum Handhaben von Objekten in einem Isolator. Der Endeffektor weist eine erste Aufnahme für ein erstes Objekt, eine zweite Aufnahme für ein zweites Objekt, und ein erstes Verlagerungselement auf, wobei die Aufnahmen in einer Längsrichtung auf entgegengesetzten Seiten des Endeffektors angeordnet sind, wobei jede Aufnahme zwischen einer Aufnahmestellung, in der das jeweilige Objekt in die entsprechende Aufnahme aufgenommen werden kann, und einer Greifstellung, in der das jeweilige Objekt mit der entsprechenden Aufnahme gegriffen werden kann, verlagerbar ist, wobei jede Aufnahme einen ersten Greifabschnitt aufweist, wobei der erste Greifabschnitt der ersten Aufnahme an einem ersten Ende des Verlagerungselements und der erste Greifabschnitt der zweiten Aufnahme an einem entgegengesetzten, zweiten Ende des Verlagerungselements angeordnet ist, wobei das Verlagerungselement derart verlagerbar ist, dass die erste Aufnahme und die zweite Aufnahme jeweils zwischen der Aufnahmestellung und der Greifstellung verlagert werden können. Des Weiteren zeigt die Druckschrift DE 10 2020 102 761 A1 einen Roboter mit einem derartigen Endeffektor, ein System und ein Verfahren zum Handhaben von Objekten in einem Isolator.

Handhabungseinrichtungen mit derartigen Greifvorrichtungen haben einen komplexen Aufbau und sind aufwendig herzustellen. Zudem können damit auch nur eine begrenzte Anzahl unterschiedlicher Objekte gehandhabt werden.

Des Weiteren ist es auch bekannt, Handhabungseinrichtungen mit sogenannten Wechselschnittstellen, die auch Multikupplungen genannt werden, auszugestalten. Diese Wechselschnittstellen können an einem Ende des mehrachsigen Arms angeordnet sein. Über die Wechselschnittstellen können unterschiedliche Endeffektoren mit dem Arm gekoppelt werden. Derartige Wechselschnittstellen erlauben beispielsweise eine mechanische und elektrische Kopplung zwischen der Handhabungseinrichtung und einem entsprechenden Endeffektor, der ein bestimmtes Werkzeug aufweist. Der Endeffektor kann dann je nach Anwendungsfall gewechselt werden. Mit anderen Worten kann für jeden Anwendungsfall ein Endeffektor mit einem entsprechenden Werkzeug verwendet werden.

Auf diese Weise können mit einer Handhabungseinrichtung auch verschiedene Greifwerkzeuge bzw. Greifvorrichtungen verwendet und gewechselt werden, wobei jede Greifvorrichtung für einen spezifischen Anwendungsfall bereitgestellt sein kann, beispielsweise zum Handhaben eines Objekts mit einer bestimmten Form und Größe. Derartige Greifvorrichtungen haben in der Regel eine Aktuierungsvorrichtung, beispielsweise einen elektrischen Motor, mittels der die Greifelemente bewegt werden. Die Aktuierungsvorrichtung kann über die elektrische Kopplung mit elektrischer Spannung versorgt sein.

Vor diesem Hintergrund gibt es aber noch Raum für Verbesserungen, insbesondere hinsichtlich der Wechselbarkeit, der Herstellung, und der hygienischen und sterilen Ausführung von Greifvorrichtungen.

Es ist daher eine Aufgabe der vorliegenden Erfindung, eine verbesserte Greifvorrichtung, ein verbessertes Greifsystem und ein entsprechendes Verfahren bereitzustellen, die ein schnelles und einfaches Wechseln einer Greifvorrichtung ermöglichen. Des Weiteren ist es eine Aufgabe der vorliegenden Erfindung, eine verbesserte Greifvorrichtung, ein verbessertes Greifsystem und entsprechende Verfahren bereitzustellen, die die Herstellung der Greifvorrichtung vereinfachen. Des Weiteren ist es eine Aufgabe der vorliegenden Erfindung, eine verbesserte Greifvorrichtung, ein verbessertes Greifsystem und entsprechende Verfahren bereitzustellen, die hohen hygienischen und sterilen Anforderungen genügen.

In einem ersten Aspekt der vorliegenden Erfindung wird eine Greifvorrichtung zum Greifen eines Objekts, insbesondere eines kosmetischen oder pharmazeutischen Objekts, bereitgestellt, wobei die Greifvorrichtung mindestens zwei Greifelemente und ein Bewegungsteil aufweist, wobei zumindest eines der beiden Greifelemente bewegbar ist, wobei das Bewegungsteil magnetisch bewegbar ist, wobei das Bewegungsteil mit dem zumindest einen bewegbaren Greifelement derart gekoppelt ist, dass eine Bewegung des Bewegungsteils auf eine Bewegung des zumindest einen bewegbaren Greifelements übertragbar ist.

Die Greifvorrichtung dient zum Greifen eines Objekts, insbesondere eines kosmetischen oder pharmazeutischen Objekts. Das Objekt kann beispielsweise ein Behälter sein. Der Behälter kann mit einem kosmetischen oder pharmazeutischen Produkt befüllt werden oder befüllt sein. Ein derartiger Behälter kann auch als kosmetischer oder pharmazeutischer Behälter bezeichnet werden. Insbesondere ist die Greifvorrichtung dazu ausgebildet, Objekte mit einer bestimmten Form und/oder Größe greifen zu können. Insbesondere ist die Greifvorrichtung dazu ausgestaltet, kosmetischer oder pharmazeutischer Behälter mit einer bestimmten Form und/oder Größe zu greifen.

Zum Greifen weist die Greifvorrichtung mindestens zwei Greifelemente auf. Mit anderen Worten kann die Greifvorrichtung zwei oder mehr Greifelemente zum Greifen des Objekts aufweisen. Beispielsweise kann die Greifvorrichtung auch zwölf Greifelemente aufweisen. Die Greifelemente können aus Kunststoff bestehen. Insbesondere können die Greifelemente, beispielsweise mittels eines additiven Verfahrens, aus einem Kunststoff gefertigt sein.

Zumindest eines der Greifelemente ist bewegbar, insbesondere rotatorisch bewegbar. Mit anderen Worten kann das zumindest eine bewegbare Greifelement derart gelagert sein, dass es, insbesondere rotatorisch, bewegt werden kann. Es kann auch jedes Greifelement bewegbar sein. Jedes bewegbare Greifelement kann einen Lagerungsabschnitt aufweisen, mit dem das jeweilige Greifelement bewegbar gelagert ist.

Die Greifelemente können relativ zueinander bewegt werden, um das Objekt zu greifen. Jedes Greifelement kann einen Greifabschnitt aufweisen. Der Greifabschnitt kann an die Form und/oder Größe des zu greifenden Objekts angepasst sein. Vorzugsweise kann sich jedes Greifelement von dem Lagerungsabschnitt zu dem Greifabschnitt erstreckten. Zum Greifen des Objekts kann jedes bewegbare Greifelement so bewegt werden, dass die Greifabschnitte aufeinander zu bewegt werden. Diese Bewegung kann auch als Greifbewegung bezeichnet werden. Wenn das Objekt gegriffen ist, liegen die Greifabschnitte an dem Objekt an. Dieser Zustand kann auch als Greifzustand bezeichnet werden. Zum Freigeben des Objekts oder zum Anordnen des Objekts zwischen den Greifelementen kann jedes bewegbare Greifelement so bewegt werden, dass die Greifabschnitte voneinander wegbewegt werden. Diese Bewegung kann auch als Freigabebewegung bezeichnet werden. Dabei werden die Greifabschnitte voneinander beabstandet, so dass zumindest nicht jeder der Greifabschnitte an dem Objekt anliegt. Dieser Zustand kann auch als Freigabezustand bezeichnet werden.

Das Bewegungsteil ist ein Teil, das bewegt werden kann. Dazu kann das Bewegungsteil derart gelagert sein, dass es, insbesondere translatorisch, bewegt werden kann. Das Bewegungsteil ist insbesondere magnetisch bewegbar. Das Bewegungsteil kann dazu beispielsweise teilweise magnetisch ausgebildet sein. Durch Wechselwirkung mit einem magnetischen Feld kann das Bewegungsteil dann magnetisch bewegt werden.

Das Bewegungsteil und das zumindest eine bewegbare Greifelement sind bewegungsgekoppelt. Dies bedeutet, dass sich das zumindest eine bewegbare Greifelement mitbewegt, wenn das Bewegungsteil bewegt wird. Dadurch kann eine Bewegung des Bewegungsteils auf eine Bewegung des zumindest einen bewegbaren Greifelements übertragen werden. Insbesondere kann eine translatorische Bewegung des Bewegungsteils auf eine rotatorische Bewegung des zumindest einen bewegbaren Greifelements übertragen werden. Wenn jedes Greifelement bewegbar ausgestaltet ist, kann jedes Greifelement mit dem Bewegungsteil bewegungsgekoppelt sein, wobei die Bewegung des Bewegungsteils auf eine Bewegung jedes Greifelements übertragen wird.

Um das Objekt zu greifen oder zu freizugeben, kann somit das Bewegungsteil magnetisch bewegt werden, was zu der Greifbewegung oder zu der Freigabebewegung der Greifelemente führt. Die Greifbewegung und die Freigabebewegung sind entgegengesetzt gerichtet. Die Bewegungsrichtung hängt dabei von dem magnetischen Feld ab, mit dem das Bewegungsteil magnetisch wechselwirkt. Je nach Ausrichtung des magnetischen Feldes wird somit die Greifbewegung oder die Freigabebewegung aktuiert.

In einem zweiten Aspekt der vorliegenden Erfindung wird ein Greifsystem mit der Greifvorrichtung nach dem ersten Aspekt und einer Aktuierungsvorrichtung bereitgestellt, wobei die Aktuierungsvorrichtung eine Magneteinrichtung zum magnetischen Bewegen des Bewegungsteils aufweist.

Die Aktuierungsvorrichtung dient zum Aktuieren der Greifvorrichtung. Mit anderen Worten ist die Aktuierungsvorrichtung dazu eingerichtet, das Bewegungsteil zu bewegen. Dadurch wird die Greifbewegung oder die Freigabebewegung der Greifelemente aktuiert.

Zum Aktuieren weist die Aktuierungsvorrichtung die Magneteinrichtung auf. Die Magneteinrichtung ist dazu eingerichtet, das Bewegungsteil magnetisch zu bewegen. Mit anderen Worten wirkt die Magneteinrichtung mit dem Bewegungsteil magnetisch zusammen, um das Bewegungsteil zu bewegen. Dazu kann die Magneteinrichtung beispielsweise ein definiertes Magnetfeld erzeugen bzw. bereitstellen. Je nach Ausrichtung des Magnetfeldes kann dann die Greifbewegung oder die Freigabebewegung aktuiert werden. Zum Wechseln zwischen der Greifbewegung und der Freigabebewegung kann das Magnetfeld beispielsweise umgepolt werden.

Zum Erzeugen des magnetischen Feldes kann die Magneteinrichtung beispielsweise eine Spule aufweisen. Die Ausrichtung des magnetischen Feldes kann über die Richtung des Stromflusses durch die Spule eingestellt werden. Alternativ kann die Magneteinrichtung zum Erzeugen des magnetischen Feldes auch einen Permanentmagneten aufweisen, der drehbar gelagert ist. Mit der Ausrichtung des Permanentmagneten kann dann die Ausrichtung des Magnetfeldes eingestellt werden.

Die Aktuierungsvorrichtung kann einen Aktuierungsvorrichtungskörper aufweisen. Die Magneteinrichtung kann in oder an dem Aktuierungsvorrichtungskörper angeordnet sein.

In einem dritten Aspekt wird eine Handhabungseinrichtung zum Handhaben von Objekten bereitgestellt, wobei die Handhabungseinrichtung das Greifsystem nach dem zweiten Aspekt aufweist.

Die Handhabungseinrichtung dient zum Handhaben von Objekten. Insbesondere kann die Handhabungseinrichtung das Greifsystem dazu verwenden, um Objekte zu greifen. Die Handhabungseinrichtung kann insbesondere Teil einer kosmetischen oder pharmazeutischen Verpackungsanlage oder Abfüllanlage sein, wobei mittels der Handhabungseinrichtung kosmetische oder pharmazeutische Objekte, wie zu Beispiel kosmetische oder pharmazeutische Behälter, gehandhabt werden.

Die Handhabungseinrichtung kann insbesondere Teil eines Verpackungssystems, wie beispielsweise einer kosmetischen oder pharmazeutischen Abfüllanlage, sein. Das Verpackungssystem kann zum Beispiel zum Verarbeiten von kosmetischen oder pharmazeutischen Behältern vorgesehen sein, wobei die Behälter mittels der Handhabungseinrichtung gehandhabt werden können.

In einem vierten Aspekt der vorliegenden Erfindung wird ein Verfahren zum Herstellen einer Greifvorrichtung bereitgestellt. Das Verfahren weist die folgenden Schritte auf:
- Bereitstellen eines Greifvorrichtungsgrundkörpers;
- Erstes Anordnen von mindestens zwei Greifelementen an und/oder in dem Greifvorrichtungsgrundkörper, wobei zumindest eines der Greifelemente bewegbar ist; und
- Zweites Anordnen eines Bewegungsteils an und/oder in dem Greifvorrichtungsgrundkörper, wobei das Bewegungsteil magnetisch bewegbar ist,
wobei das Bewegungsteil mit dem zumindest einen bewegbaren Greifelement derart gekoppelt wird, dass eine Bewegung des Bewegungsteils auf eine Bewegung des zumindest einen bewegbaren Greifelements übertragbar ist.

Mit dem Verfahren nach dem vierten Aspekt kann insbesondere die Greifvorrichtung nach dem ersten Aspekt hergestellt werden.

Das zumindest eine bewegbare Greifelemente kann bezüglich des Greifvorrichtungsgrundkörpers, insbesondere rotatorisch, bewegbar gelagert sein. Das Bewegungsteil kann bezüglich des Greifvorrichtungsgrundkörpers, insbesondere translatorisch, bewegbar gelagert sein. Der Greifvorrichtungsgrundkörpers dient somit als Grundkörper, bezüglich dem die Greifelemente und das Bewegungsteil angeordnet und gelagert sind.

Insbesondere werden das Bewegungsteil und das zumindest eine bewegbare Greifelement derart angeordnet, dass das Bewegungsteil mit dem zumindest einen bewegbaren Greifelement derart gekoppelt ist, dass eine Bewegung des Bewegungsteils auf eine Bewegung des zumindest einen bewegbaren Greifelements übertragen wird.

In einem fünften Aspekt der vorliegenden Erfindung wird ein Verfahren zum Handhaben von Objekten, insbesondere von kosmetischen oder pharmazeutischen Objekten, bereitgestellt. Das Verfahren weist die folgenden Schritte auf:
- Erstes Koppeln einer ersten Greifvorrichtung zum Greifen eines ersten Objekts mit einer Aktuierungsvorrichtung, wobei die erste Greifvorrichtung mindestens zwei Greifelemente und ein Bewegungsteil aufweist, wobei zumindest eines der Greifelemente bewegbar ist, wobei das Bewegungsteil magnetisch bewegbar ist, wobei das Bewegungsteil mit dem zumindest einen bewegbaren Greifelement derart gekoppelt ist, dass eine Bewegung des Bewegungsteils auf eine Bewegung des zumindest einen bewegbaren Greifelements übertragbar ist; und
- Erstes magnetisches Bewegen des Bewegungsteils der ersten Greifvorrichtung mittels einer Magneteinrichtung der Aktuierungsvorrichtung, um das erste Objekt mit der ersten Greifvorrichtung zu greifen oder freizugeben.

Die erste Greifvorrichtung dient zum Greifen des ersten Objekts. Die erste Greifvorrichtung kann entsprechend der Greifvorrichtung nach dem ersten Aspekt ausgebildet sein.

Durch das erste Koppeln wird die Greifvorrichtung relativ zu der Aktuierungsvorrichtung in einer definierten Lage angeordnet. In der definierten Lage kann die Magneteinrichtung mit dem Bewegungsteil magnetisch wechselwirken. Insbesondere kann die Magneteinrichtung das Bewegungsteil magnetisch bewegen, wenn die Greifvorrichtung in der definierten Lage angeordnet ist.

Durch das erste magnetische Bewegen kann die Greifvorrichtung magnetisch aktuiert werden. Insbesondere wird durch das magnetische Bewegen das zumindest eine bewegbare Greifelement bewegt, wodurch das erste Objekt gegriffen oder freigegeben werden kann.

Das Handhaben der Objekte kann mittels einer Handhabungseinrichtung erfolgen, die die Aktuierungsvorrichtung aufweist. Die Handhabungseinrichtung kann insbesondere die Magneteinrichtung dazu veranlassen, das erste Bewegungsteil durch die Magneteinrichtung magnetisch zu bewegen. Dadurch kann das erste Objekt gegriffen werden. Insbesondere kann diese Handhabungseinrichtung entsprechend der Handhabungseinrichtung nach dem dritten Aspekt ausgebildet sein.

Die erfindungsgemäße Greifvorrichtung ist einfach, mit geringem Aufwand und kostengünstig herzustellen. Insbesondere braucht die Greifvorrichtung keine eigene Aktuierungsvorrichtung wie beispielsweise einen Elektromotor. Dadurch wird auch erreicht, dass ein Greifsystem bzw. eine Handhabungseinrichtung einfach und schnell an unterschiedliche Anwendungsfälle angepasst werden kann. Insbesondere kann dazu eine geeignete Greifvorrichtung zum Greifen des zu handhabenden Objekts jeweils gemeinsam mit der Aktuierungsvorrichtung verwendet werden.

Des Weiteren kann die erfindungsgemäße Greifvorrichtung besonders einfach gewechselt werden. Zum einen erfolgt die Bewegungsübertragung rein magnetisch. Dadurch ist keine spezielle mechanische oder elektrische Kopplung zur Aktuierung erforderlich. Zum anderen ist die Aktuierungsvorrichtung separat bereitgestellt und muss nicht getauscht werden. Mit anderen Worten kann für mehrere Greifvorrichtungen dieselbe Aktuierungsvorrichtung verwendet werden.

Da die Bewegungsübertragung rein magnetisch funktioniert und dadurch keine elektrische oder mechanische Kopplung erforderlich ist, kann die Mechanik der Greifvorrichtung zudem als gekapselte Mechanik bereitgestellt werden. Dadurch wird eine hohe hygienische und sterile Ausführung einer Greifvorrichtung ermöglicht.

Die eingangs gestellte Aufgabe wird somit vollumfänglich gelöst.

In einer ersten Ausgestaltung der Aspekte kann das zumindest eine bewegbare Greifelement zwischen einer Greifstellung zum Greifen des Objekts und einer Freigabestellung zum Freigeben des Objekts bewegbar sein.

Die Greifstellung dient zum Greifen des Objekts. Die Freigabestellung dient zum Freigeben bzw. Loslassen des Objekts. Die Greifstellung entspricht dem Greifzustand der Greifvorrichtung. Die Freigabestellung entspricht dem Freigabezustand der Greifvorrichtung. In der Greifstellung ist ein Abstand der Greifabschnitte der Greifelemente kleiner als in der Freigabestellung. In der Greifstellung liegen die Greifabschnitte an dem Objekt an. In der Freigabestellung sind die Greifelemente so angeordnet, dass das Objekt zwischen den Greifelementen angeordnet werden kann. Insbesondere liegen in der Freigabestellung nicht alle Greifabschnitte, vorzugsweise keiner der Greifabschnitte, an dem Objekt an.

In einer weiteren Ausgestaltung der Aspekte kann das Bewegungsteil zwischen einer ersten Position und einer zweiten Position bewegbar sein, wobei das Bewegungsteil mit dem zumindest einen bewegbaren Greifelement derart gekoppelt ist, dass das zumindest eine bewegbare Greifelement in der Greifstellung angeordnet ist, wenn das Bewegungsteil in der ersten Position angeordnet ist, und das zumindest eine bewegbare Greifelement in der Freigabestellung angeordnet ist, wenn das Bewegungsteil in der zweiten Position angeordnet ist.

Mit anderen Worten ist die erste Position der Greifstellung und die zweite Position der Freigabestellung zugeordnet. Durch Bewegen des magnetischen Elements zwischen der ersten Position und der zweiten Position kann das Greifelement zwischen der Greifstellung und der Freigabestellung bewegt werden. Dadurch kann über eine Bewegung des Bewegungsteils die Greifbewegung zum Greifen des Objekts und die Freigabebewegung zum Freigeben des Objekts erfolgen.

In einer weiteren Ausgestaltung der Aspekte kann das Bewegungsteil zumindest ein magnetisches Element aufweisen.

Das magnetische Element ist magnetisch. Dazu kann das magnetische Element beispielsweise ein magnetisches Material aufweisen. Das magnetische Element kann insbesondere ein Permanentmagnet sein. Das magnetische Element dient zum magnetischen Bewegen des Bewegungsteils. Das Bewegungsteil kann über das magnetische Element durch Anlegen eines äußeren magnetischen Feldes bewegt werden. Insbesondere kann das Bewegungsteil auch mehrere, insbesondere zwei magnetische Elemente aufweisen.

In einer weiteren Ausgestaltung der Aspekte kann das zumindest eine bewegbare Greifelement ein erstes Kopplungselement aufweisen, wobei das Bewegungsteil ein zweites Kopplungselement aufweist, wobei das erste Kopplungselement mit dem zweiten Kopplungselement gekoppelt ist.

Das erste Kopplungselement kann beispielsweise einen Vorsprung oder eine Nase aufweisen. Das zweite Kopplungselement kann beispielsweise eine Nut, eine Aussparung oder eine Kulisse aufweisen, die komplementär zu dem Vorsprung oder der Nase ausgebildet sind. Das erste Kopplungselement kann mit dem zweiten Kopplungselement in Eingriff gebracht werden, um das erste Kopplungselement mit dem zweiten Kopplungselement zu koppeln. Im gekoppelten Zustand sind das Bewegungsteil und das zumindest eine Greifelement bewegungsgekoppelt. Wenn jedes Greifelement bewegbar ausgebildet ist, kann jedes Greifelement ein erstes Kopplungselement aufweisen, wobei dann jedes erste Kopplungselement mit dem zweiten Kopplungselement gekoppelt ist. Das zweite Kopplungselement kann fest mit dem magnetischen Element verbunden sein. Alternativ kann das magnetische Element auch das zweite Kopplungselement ausbilden. Dazu kann das magnetische Element beispielsweise eine Nut, eine Aussparung oder eine Kulisse aufweisen. Wenn das Bewegungsteil zwei magnetische Elemente aufweist, kann das zweite Kopplungselement zwischen den beiden magnetischen Elementen angeordnet sein. Alternativ kann jedes bewegbare Greifelement ein erstes Kopplungselement und das Bewegungsteil für jedes bewegbare Greifelement ein entsprechendes zweites Kopplungselement aufweisen. Jedes erste Kopplungselement kann beispielsweise eine Anzahl von Zähnen oder Vorsprüngen aufweisen und jedes zweite Kopplungselement eine entsprechende Anzahl von Nuten oder Vertiefungen, in die die Zähne oder Vorsprünge der jeweiligen ersten Kopplungselemente eingreifen können.

In einer weiteren Ausgestaltung der Aspekte kann die Greifvorrichtung einen Greifvorrichtungsgrundkörper aufweisen, wobei das zumindest eine bewegbare Greifelement bezüglich des Greifvorrichtungsgrundkörpers bewegbar gelagert ist, und wobei das Bewegungsteil bezüglich des Greifvorrichtungsgrundkörper bewegbar gelagert ist.

Der Greifvorrichtungsgrundkörper kann als Montagekörper für die Greifelemente und das Bewegungsteil dienen. Jedes bewegbare Greifelement kann in oder an dem Greifvorrichtungsgrundkörper bewegbar gelagert sein. Insbesondere kann jedes bewegbare Greifelement in oder an dem Greifvorrichtungsgrundkörper jeweils um eine Drehachse drehbar gelagert sein. Die Drehachsen können vorzugsweise parallel zueinander angeordnet sein. Wenn ein Greifelement nicht bewegbar ausgestaltet ist, kann dieses an dem Greifvorrichtungsgrundkörper starr angeordnet bzw. starr gelagert, insbesondere befestigt, sein. Jedes Greifelement kann einen Lagerungsabschnitt aufweisen. Der Lagerungsabschnitt kann zur bewegbaren Lagerung an oder in dem Greifvorrichtungsgrundkörper oder zur starren Anordnung an oder in dem Greifvorrichtungsgrundkörper dienen. Jedes Greifelement kann sich vorzugsweise von dem Lagerungsabschnitt zu dem Greifabschnitt erstrecken. Insbesondere können der Lagerungsabschnitt und der Greifabschnitt auf entgegengesetzten Seiten des Greifelements angeordnet sein. Das Bewegungsteil kann in oder an dem Greifvorrichtungsgrundkörper bewegbar gelagert sein. Insbesondere kann das Bewegungsteil in oder an dem Greifvorrichtungsgrundkörper linear bewegbar gelagert sein. Die lineare Bewegung kann parallel zu einer Bewegungsrichtung erfolgen. Der Greifvorrichtungsgrundkörper kann beispielsweise eine längliche Aussparung oder Führung zur linear bewegbaren Lagerung des Bewegungsteils aufweisen.

In einer weiteren Ausgestaltung der Aspekte können der Greifvorrichtungsgrundkörper und/oder die Greifelemente mittels eines additiven Verfahrens hergestellt sein.

Das additive Verfahren kann insbesondere ein 3D-Druckverfahren sein. Im Allgemeinen ist ein additives Verfahren ein Prozess zum Herstellen eines dreidimensionalen Gegenstands. Dieser Gegenstand kann auch als Werkstück bezeichnet werden. Dabei werden nacheinander Schichten bzw. Lagen eines Materials (wie zum Beispiel eines Kunststoffes oder eines Metalls) aufeinandergelegt. Mit anderen Worten wird bei dem additiven Verfahren Material Schicht für Schicht aufgetragen, um den dreidimensionalen Gegenstand zu erzeugen. Dieser Prozess kann beispielsweise computergesteuert erfolgen, sprich gesteuert durch einen Computer oder eine Steuereinrichtung. Das 3D-Design des herzustellenden Gegenstands ist dabei digital in einem Computerprogram definiert und liegt insbesondere darin als virtuelles Modell vor. Das virtuelle Modell kann beispielsweise ein CAD-Modell sein. Das additive Verfahren kann einen oder mehrere der folgenden Verfahren aufweisen: Freistrahl-Bindemittelauftrag, Materialauftrag mit gerichteter Energieeinbringung, Materialextrusion, Freistrahl-Materialauftrag, pulverbettbasiertes Schmelzen, Schichtlaminierung, und badbasierte Photopolymerisation. Zum Durchführen dieser Verfahren können entsprechende Vorrichtungen verwendet werden, insbesondere eine 3D-Druckvorrichtung. Derartige additive Verfahren und Vorrichtungen zum Herstellen eines Gegenstands sind im Stand der Technik allgemein bekannt und werden im Folgenden nicht näher erläutert. Zum Erstellen des Greifvorrichtungsgrundkörpers und/oder der Greifelemente kann somit mittels des additiven Verfahrens ein Material Schicht für Schicht auf einen Werkstückhalter aufeinandergelegt werden. Der Greifvorrichtungsgrundkörper und/oder die Greifelemente sind vorzugsweise jeweils einstückig bzw. integral geformt. Der Greifvorrichtungsgrundkörper kann auch zweiteilig mit einem Oberteil und einem Unterteil ausgebildet sein, wobei das Oberteil und das Unterteil jeweils mittels eines additiven Verfahrens hergestellt werden. Das Oberteil und das Unterteil können dann miteinander verbunden, insbesondere verschraubt, werden, um den Greifvorrichtungsgrundkörper zu bilden. Der Greifvorrichtungsgrundkörper und/oder die Greifelemente werden vorzugsweise aus einem Kunststoff gefertigt. Das Herstellen des Greifvorrichtungsgrundkörpers und/oder der Greifelemente mittels eines additiven Verfahrens ist besonders einfach, schnell und kostengünstig.

In einer weiteren Ausgestaltung der Aspekte kann jedes der Greifelemente bewegbar sein, wobei das Bewegungsteil mit jedem Greifelement derart gekoppelt ist, dass eine Bewegung des Bewegungsteils auf eine Bewegung des jeweiligen Greifelements übertragbar ist.

Auf diese Weise kann jedes der Greifelemente einfach mittels des Bewegungsteils bewegt werden.

In einer weiteren Ausgestaltung der Aspekte kann die Greifvorrichtung mit der Aktuierungsvorrichtung koppelbar sein.

Wenn die Greifvorrichtung mit der Aktuierungsvorrichtung gekoppelt ist, befinden sich die Greifvorrichtung und die Aktuierungsvorrichtung in einem gekoppelten Zustand. In dem gekoppelten Zustand ist die Greifvorrichtung in einer definierten Lage relativ zu der Aktuierungsvorrichtung. Insbesondere kann die Greifvorrichtung zum Koppeln lösbar an der Aktuierungsvorrichtung montiert werden, beispielsweise mittels eines Befestigungsmittels, eines Haltemittels oder eines Befestigungsmechanismus wie einer Rasterung. Zum Beispiel kann die Kopplung über einen Bajonett-Verschluss erfolgen. Dazu kann die Greifvorrichtung, insbesondere der Greifvorrichtungskörper, einen Kopplungsabschnitt und die Aktuierungsvorrichtung eine Drehhülse aufweisen, die mit einander gekoppelt werden können.

In einer weiteren Ausgestaltung der Aspekte kann die Aktuierungsvorrichtung eine Aufnahme aufweisen, wobei die Greifvorrichtung in die Aufnahme einsetzbar ist.

Insbesondere kann die Greifvorrichtung in die Aufnahme eingesetzt werden und aus der Aufnahme entnommen werden. Im eingesetzten Zustand ist die Greifvorrichtung in einer definierten Lage relativ zu der Aktuierungsvorrichtung angeordnet. Durch Einsetzen der Greifvorrichtung in die Aufnahme kann die Greifvorrichtung mit der Aktuierungsvorrichtung gekoppelt werden. In der Aufnahme kann die Greifvorrichtung zudem lösbar gehalten, geklemmt, befestigt oder verrastet sein. Im eingesetzten Zustand ist die Greifvorrichtung so angeordnet, dass die Magneteinrichtung das Bewegungsteil magnetisch bewegen kann. Die Aktuierungsvorrichtung kann einen Aktuierungsvorrichtungskörper aufweisen. Die Aufnahme ist vorzugsweise in oder an dem Aktuierungsvorrichtungskörper ausgebildet. Die Magneteinrichtung kann in oder an dem Aktuierungsvorrichtungskörper angeordnet sein.

In einer weiteren Ausgestaltung der Aspekte kann das Greifsystem eine Mehrzahl von Greifvorrichtungen aufweisen.

Jede Greifvorrichtung kann für einen bestimmten Anwendungsfall ausgebildet sein. Beispielsweise kann jede Greifvorrichtung zum Greifen eines bestimmten Objekts ausgebildet sein. Zum Beispiel kann eine erste Greifvorrichtung für ein erstes Objekt und eine zweite Greifvorrichtung für ein zweites Objekt vorgesehen sein. Die Aktuierungsvorrichtung kann dann je nach Anwendungsfall mit der entsprechenden Greifvorrichtung zusammenwirken und diese magnetisch Aktuieren.

In einer weiteren Ausgestaltung der Aspekte kann jede Greifvorrichtung wahlweise mit der Aktuierungsvorrichtung koppelbar sein, insbesondere wobei jede Greifvorrichtung wahlweise in die Aufnahme der Aktuierungsvorrichtung einsetzbar ist.

Jede Greifvorrichtung kann mit Aktuierungsvorrichtung gekoppelt werden. Insbesondere kann jede Greifvorrichtung in die Aufnahme der Aktuierungsvorrichtung eingesetzt werden. Auf diese Weise kann die Greifvorrichtung schnell und einfach ausgetauscht bzw. gewechselt werden. Insbesondere lässt sich das Greifsystem dadurch auf besonders einfache Weise an unterschiedliche Anwendungsfälle anpassen.

In einer weiteren Ausgestaltung der Aspekte kann die Handhabungseinrichtung eine mehrachsige Trägerstruktur aufweisen, wobei die Aktuierungsvorrichtung an einem Ende der mehrachsigen Trägerstruktur angeordnet ist.

Die Trägerstruktur ist dazu ausgebildet, die Aktuierungsvorrichtung zu tragen. Insbesondere kann die Trägerstruktur dazu ausgebildet sein, die Aktuierungsvorrichtung im Raum zu bewegen. Beispielsweise kann die Trägerstruktur einen mehrachsigen, bewegbaren Arm aufweisen, wobei die Aktuierungsvorrichtung an einem Ende des Arms angeordnet, insbesondere montiert, sein kann. Wenn die Aktuierungsvorrichtung mit der Greifvorrichtung gekoppelt ist und die Greifvorrichtung ein Objekt greift, kann das Objekt bewegt werden, indem die Trägerstruktur die Aktuierungsvorrichtung bewegt.

In einer weiteren Ausgestaltung des vierten oder fünften Aspekts können der Greifvorrichtungsgrundkörper und/oder die Greifelemente mittels eines additiven Verfahrens hergestellt werden.

Wie zuvor bereits beschrieben, kann zum Erstellen des Greifvorrichtungsgrundkörpers und/oder der Greifelemente mittels des additiven Verfahrens ein Material Schicht für Schicht auf einen Werkstückhalter aufeinandergelegt werden. Der Greifvorrichtungsgrundkörper und/oder die Greifelemente können jeweils einstückig bzw. integral geformt sein. Der Greifvorrichtungsgrundkörper kann auch zweiteilig mit einem Oberteil und einem Unterteil ausgebildet sein, wobei das Oberteil und das Unterteil jeweils mittels eines additiven Verfahrens hergestellt werden. Das Oberteil und das Unterteil können dann miteinander verbunden, insbesondere verschraubt, werden, um den Greifvorrichtungsgrundkörper zu bilden. Der Greifvorrichtungsgrundkörper und/oder die Greifelemente werden vorzugsweise aus einem Kunststoff gefertigt. Das Herstellen des Greifvorrichtungsgrundkörpers und/oder der Greifelemente mittels eines additiven Verfahrens ist besonders einfach, schnell und kostengünstig.

In einer weiteren Ausgestaltung des fünften Aspekts kann das Verfahren des Weiteren den folgenden Schritt aufweisen:
- Bewegen der Aktuierungsvorrichtung im Raum, während die erste Greifvorrichtung mit der Aktuierungsvorrichtung gekoppelt ist und das erste Objekt gegriffen ist.

Auf diese Weise kann das erste Objekt im Raum bewegt werden. Wie zuvor beschrieben, kann das Bewegen der Aktuierungsvorrichtung mittels einer mehrachsigen Trägerstruktur erfolgen, die die Aktuierungsvorrichtung trägt. Die Aktuierungsvorrichtung und die Trägerstruktur können Teil einer Handhabungseinrichtung sein.

In einer weiteren Ausgestaltung des fünften Aspekts kann das zumindest eine bewegbare Greifelement der ersten Greifvorrichtung zwischen einer Greifstellung zum Greifen des ersten Objekts und einer Freigabestellung zum Freigeben des ersten Objekts bewegbar sein, wobei in dem Schritt des ersten magnetischen Bewegens das Bewegungsteil magnetisch bewegt wird, um das zumindest eine bewegbare Greifelement der ersten Greifvorrichtung zwischen der Greifstellung und der Freigabestellung zu bewegen.

Wie zuvor beschrieben, dient die Greifstellung zum Greifen des Objekts. Die Freigabestellung dient zum Freigeben bzw. Loslassen des Objekts. Da das zumindest eine Greifelement mit dem Bewegungsteil bewegungsgekoppelt ist, kann das Greifelement somit zwischen der Greifstellung und der Freigabestellung bewegt werden, indem das Bewegungsteil durch die Magneteinrichtung magnetisch bewegt wird. Auf diese Weise kann das erste Objekt gegriffen oder freigegeben werden.

In einer weiteren Ausgestaltung des fünften Aspekts kann das Verfahren die folgenden Schritte aufweisen:
- Entkoppeln der ersten Greifvorrichtung von der Aktuierungsvorrichtung;
- Zweites Koppeln einer zweiten Greifvorrichtung zum Greifen eines zweiten Objekts mit der Aktuierungsvorrichtung, wobei die zweite Greifvorrichtung mindestens zwei Greifelemente und ein Bewegungsteil aufweist, wobei zumindest eines der Greifelemente bewegbar ist, wobei das Bewegungsteil magnetisch bewegbar ist, wobei das Bewegungsteil mit dem zumindest einen bewegbaren Greifelement derart gekoppelt ist, dass eine Bewegung des Bewegungsteils auf eine Bewegung des zumindest einen bewegbaren Greifelements übertragbar ist; und
- Zweites magnetisches Bewegen des Bewegungsteils der zweiten Greifvorrichtung mittels der Magneteinrichtung der Aktuierungsvorrichtung, um das zweite Objekt mit der zweiten Greifvorrichtung zu greifen oder freizugeben.

Auf diese Weise kann die erste Greifvorrichtung durch eine zweite Greifvorrichtung ausgewechselt werden. Die zweite Greifvorrichtung dient zum Greifen des zweiten Objekts. Die zweite Greifvorrichtung kann entsprechend der Greifvorrichtung nach dem ersten Aspekt ausgebildet sein. Das zweite Objekt kann sich in Form und/oder Größe von dem ersten Objekt unterscheiden. Insbesondere können die Greifabschnitte der ersten Greifvorrichtung und die Greifabschnitte der zweiten Greifvorrichtung unterschiedlich ausgestaltet sein. Mit anderen Worten können durch das Wechseln der Greifvorrichtungen mit der Aktuierungsvorrichtung verschiede Greifvorrichtungen zum Greifen unterschiedlicher Objekte verwendet werden. Zum Wechseln wird die erste Greifvorrichtung von der Aktuierungsvorrichtung entkoppelt und die zweite Greifvorrichtung mit der Aktuierungsvorrichtung gekoppelt. Dabei wird die zweite Greifvorrichtung auf dieselbe Weise mit der Aktuierungsvorrichtung gekoppelt wie die erste Greifvorrichtung. Wenn die zweite Greifvorrichtung mit der Aktuierungsvorrichtung gekoppelt ist, kann die Magneteinrichtung das Bewegungsteil der zweiten Greifvorrichtung magnetisch bewegen. Auf diese Weise erfolgt das zweite Bewegen. Da das Bewegungsteil der zweiten Greifvorrichtung und die Greifelemente der zweiten Greifvorrichtung bewegungsgekoppelt, kann durch das magnetische Bewegen des Bewegungsteils der zweiten Greifvorrichtung das Greifelement der zweiten Greifvorrichtung entsprechend bewegt werden, um das zweite Objekt zu greifen oder freizugeben.

In einer weiteren Ausgestaltung des fünften Aspekts kann das Verfahren des Weiteren den folgenden Schritt aufweisen:
- Bewegen der Aktuierungsvorrichtung im Raum, während die zweite Greifvorrichtung mit der Aktuierungsvorrichtung gekoppelt ist und das zweite Objekt gegriffen ist.

Auf diese Weise kann das zweite Objekt im Raum bewegt werden. Wie zuvor beschrieben, kann das Bewegen der Aktuierungsvorrichtung mittels einer mehrachsigen Trägerstruktur erfolgen, die die Aktuierungsvorrichtung trägt. Die Aktuierungsvorrichtung und die Trägerstruktur können Teil einer Handhabungseinrichtung sein.

In einer weiteren Ausgestaltung des fünften Aspekts kann das zumindest eine bewegbare Greifelement der zweiten Greifvorrichtung zwischen einer Greifstellung zum Greifen des zweiten Objekts und einer Freigabestellung zum Freigeben des zweiten Objekts bewegbar sein, wobei in dem Schritt des zweiten magnetischen Bewegens das Bewegungsteil magnetisch bewegt wird, um das zumindest eine bewegbare Greifelement der zweiten Greifvorrichtung zwischen der der Greifstellung und der Freigabestellung zu bewegen.

Wie zuvor beschrieben, dient die Greifstellung zum Greifen des Objekts. Die Freigabestellung dient zum Freigeben bzw. Loslassen des Objekts. Da das zumindest eine Greifelement mit dem Bewegungsteil bewegungsgekoppelt ist, kann das Greifelement somit zwischen der Greifstellung und der Freigabestellung bewegt werden, indem das Bewegungsteil durch die Magneteinrichtung magnetisch bewegt wird. Auf diese Weise kann das zweite Objekt gegriffen oder freigegeben werden.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine isometrische Ansicht einer ersten Ausführungsform einer Greifvorrichtung;
- Fig. 2: die Ansicht der Greifvorrichtung aus Fig. 1 ohne Oberteil eines Greifvorrichtungs-grundkörpers der Greifvorrichtung;
- Fig. 3: eine isometrische Ansicht eines Greifelements der Greifvorrichtung aus Fig. 1;
- Fig. 4: eine isometrische Ansicht eines Bewegungsteils der Greifvorrichtung aus Fig. 1;
- Fig. 5: eine Draufsicht auf die Greifvorrichtung aus Fig. 1 in der Greifstellung;
- Fig. 6: eine Draufsicht auf die Greifvorrichtung aus Fig. 1 in der Freigabestellung;
- Fig. 7: eine isometrische Ansicht einer ersten Ausführungsform eines Greifsystem im entkoppelten Zustand;
- Fig. 8: eine isometrische Ansicht des Greifsystem aus Fig. 5 im gekoppelten Zustand;
- Fig. 9: eine isometrische Ansicht einer Aktuierungsvorrichtung des Greifsystem aus Fig. 5;
- Fig. 10: die Ansicht der Aktuierungsvorrichtung aus Fig. 1 ohne Deckelelement eines Aktuierungsvorrichtungskörpers der Aktuierungsvorrichtung;
- Fig. 11: eine isometrische Ansicht einer zweiten Ausführungsform einer Greifvorrichtung;
- Fig. 12: die Ansicht der Greifvorrichtung aus Fig. 1 ohne Greifvorrichtungsgrundkörpers der Greifvorrichtung;
- Fig. 13: eine isometrische Ansicht einer zweiten Ausführungsform eines Greifsystem im entkoppelten Zustand;
- Fig. 14: eine isometrische Ansicht des Greifsystem aus Fig. 13 im gekoppelten Zustand mit Greifelementen in einer Freigabestellung;
- Fig. 15: eine isometrische Ansicht des Greifsystem aus Fig. 13 im gekoppelten Zustand mit Greifelementen in einer Greifstellung;
- Fig. 16: eine isometrische Ansicht einer Aktuierungsvorrichtung des Greifsystem aus Fig. 5;
- Fig. 17: eine Schnittansicht des Greifsystem aus Fig. 13 im gekoppelten Zustand mit Greifelementen in der Freigabestellung;
- Fig. 18: eine Schnittansicht des Greifsystem aus Fig. 13 im gekoppelten Zustand mit Greifelementen in der Greifstellung;
- Fig. 19: eine schematische Ansicht einer Ausführungsform einer Handhabungseinrichtung;
- Fig. 20: eine schematische Ansicht einer Ausführungsform eines Verfahrens zum Herstellen einer Greifvorrichtung; und
- Fig. 21: eine schematische Ansicht einer Ausführungsform eines Verfahrens zum Handhaben von Objekten.

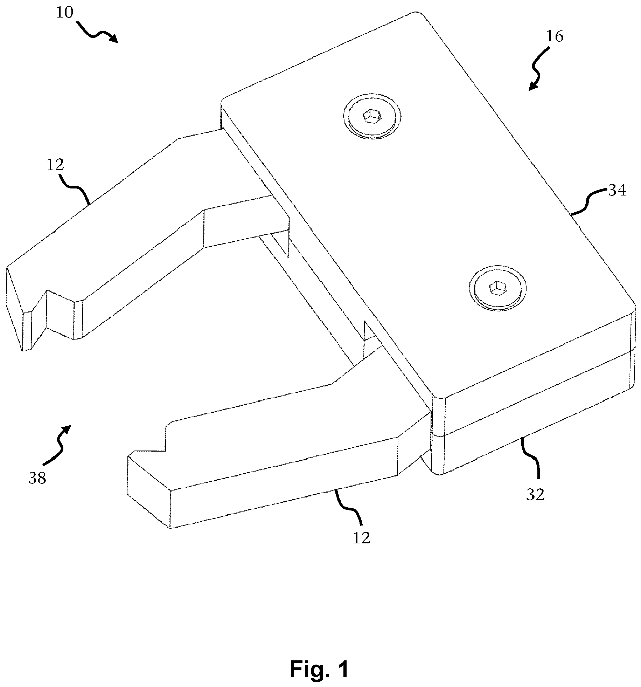

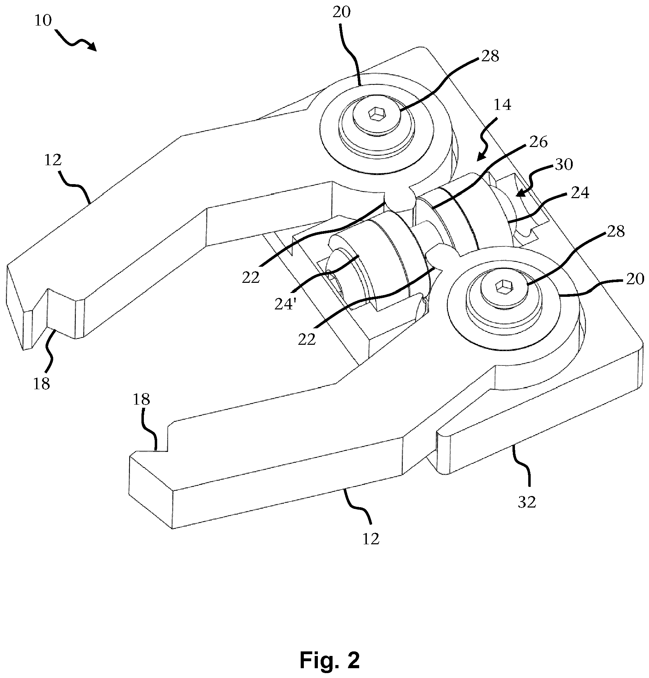

Die Figuren 1 und 2 zeigen eine erste Ausführungsform einer Greifvorrichtung in ihrer Gesamtheit mit der Bezugsziffer 10 bezeichnet. Die Greifvorrichtung 10 dient zum Greifen eines Objekts. Das Objekt kann ein kosmetisches oder pharmazeutisches Objekt sein. Beispielsweise kann das Objekt ein Behälter sein.

Die Greifvorrichtung 10 weist zwei Greifelemente 12 auf. Die Greifelemente 12 dienen zum Greifen des Objekts. Insbesondere können die Greifelemente 12 relativ zueinander bewegt werden, um das Objekt zu greifen. Die Greifvorrichtung 10 kann auch mehr als zwei Greifelemente 12 aufweisen. In der vorliegenden Ausführungsform ist jedes der Greifelemente 12 bewegbar ausgestaltet. Alternativ kann auch nur eines der Greifelemente 12 bewegbar ausgestaltet sein. Die Greifelemente 12 können aus Kunststoff hergestellt sein. Zur Herstellung der Greifelemente 12 kann insbesondere ein additives Verfahren verwendet werden.

Die Greifvorrichtung 10 weist des Weiteren ein Bewegungsteil 14 auf. Das Bewegungsteil 14 ist magnetisch bewegbar. Das Bewegungsteil 14 kann dazu beispielsweise teilweise magnetisch ausgebildet sein. Durch Wechselwirkung mit einem magnetischen Feld kann das Bewegungsteil 14 magnetisch bewegt werden.

Das Bewegungsteil 14 ist mit jedem bewegbaren Greifelement derart gekoppelt, dass eine Bewegung des Bewegungsteils 14 auf eine Bewegung des jeweiligen, bewegbaren Greifelements 12 übertragbar ist.

Die Greifvorrichtung 10 kann des Weiteren einen Greifvorrichtungsgrundkörper 16 aufweisen. Der Greifvorrichtungsgrundkörper 16 kann als Montagekörper für die Greifelemente 12 und das Bewegungsteil 14 dienen. Der Greifvorrichtungsgrundkörper 16 kann aus Kunststoff hergestellt sein. Zur Herstellung des Greifvorrichtungsgrundkörper 16 kann insbesondere ein additives Verfahren verwendet werden.

Jedes bewegbare Greifelement 12 ist bezüglich des Greifvorrichtungsgrundkörpers 16, vorzugsweise rotatorisch, bewegbar gelagert. Insbesondere ist jedes Greifelement 12 an bzw. in dem Greifvorrichtungsgrundkörper 16 um eine Drehachse drehbar gelagert. Die Drehachsen sind vorzugsweise parallel zueinander angeordnet.

Das Bewegungsteil 14 ist bezüglich des Greifvorrichtungsgrundkörper 16, vorzugsweise translatorisch, bewegbar gelagert. Insbesondere ist das Bewegungsteil 14 in dem Greifvorrichtungsgrundkörper 16 parallel zu einer Bewegungsrichtung linear bewegbar gelagert.

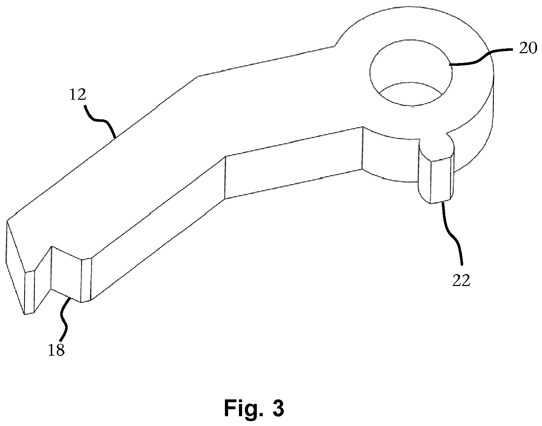

In Fig. 3 ist ein Greifelement 12 der Greifvorrichtung 10 im Detail dargestellt. Jedes der Greifelemente 12 der Greifvorrichtung 10 kann entsprechend dem Greifelement aus Fig. 3 ausgestaltet sein.

Das Greifelement 12 weist einen Greifabschnitt 18 auf. Der Greifabschnitt 18 kann an die Form und/oder Größe des zu greifenden Objekts angepasst sein.

Das Greifelement 12 weist des Weiteren einen Lagerungsabschnitt 20. Der Lagerungsabschnitt 20 dient zur bewegbaren Lagerung des Greifelements 12. Insbesondere kann das Greifelement mittels des Lagerungsabschnitts 20 an oder in dem Greifvorrichtungsgrundkörper 16 drehbar gelagert sein. Zur drehbaren Lagerung des Lagerungsabschnitts 20 an dem Greifvorrichtungsgrundkörper 16 kann beispielsweise ein Bolzen 28 vorgesehen sein. Der Bolzen 28 kann fest mit dem Greifvorrichtungsgrundkörper 16 verbunden sein. Alternativ kann der Greifvorrichtungsgrundkörper 16 den Bolzen 28 ausbilden. Der Lagerungsabschnitts 20 kann insbesondere als Bohrung ausgebildet sein. Der Bolzen kann sich durch die Bohrung hindurcherstrecken, so dass das Greifelement 12 um den Bolzen 28 drehbar ist.

Das Greifelement 12 erstreckt sich vorzugsweise von dem Lagerungsabschnitt 20 zu dem Greifabschnitt 18. Insbesondere können der Lagerungsabschnitt 20 und der Greifabschnitt 18 auf entgegengesetzten Seiten des Greifelements 12 angeordnet sein.

Das Greifelement 12 weist ein erstes Kopplungselement 22. Das erste Kopplungselement 22 kann beispielsweise einen Vorsprung oder eine Nase aufweisen. Das erste Kopplungselement 22 kann an oder in der Nähe des Lagerungsabschnitts 20 angeordnet sein. Das erste Kopplungselement 22 kann vorzugsweise an dem Ende des Greifelements 12 angeordnet sein, an dem auch der Lagerungsabschnitts 20 angeordnet ist.

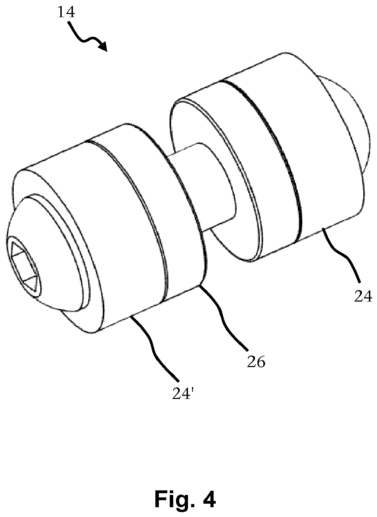

In Fig. 4 ist das Bewegungsteil 14 der Greifvorrichtung 14 im Detail dargestellt.

Das Bewegungsteil 14 weist mindestens ein magnetisches Element 24 auf. Das magnetische Element 24 ist magnetisch. Dazu kann das magnetische Element 24 beispielsweise ein magnetisches Material aufweisen. Das magnetische Element 24 kann insbesondere ein Permanentmagnet sein. Das magnetische Element 24 dient zum magnetischen Bewegen des Bewegungsteils 14. Das Bewegungsteil 14 kann insbesondere zwei magnetische Elemente 24, 24' aufweisen.

Das Bewegungsteil 14 weist des Weiteren ein zweites Kopplungselement 26 auf. Das zweite Kopplungselement 26 kann beispielsweise eine Nut eine Aussparung oder eine Kulisse aufweisen. Das zweite Kopplungselement 26 kann komplementär zu dem ersten Kopplungselement 22 ausgebildet sein. Das zweite Kopplungselement 26 ist fest mit jedem der magnetischen Elemente 24, 24' verbunden. Insbesondere ist das zweite Kopplungselement 26 zwischen den beiden magnetischen Elementen 24, 24' angeordnet.

Das erste Kopplungselement 24 ist mit dem zweiten Kopplungselement 26 gekoppelt. Insbesondere kann das erste Kopplungselement 24 jedes Greifelements 12 mit dem zweiten Kopplungselement 26 des Bewegungsteils 14 in Eingriff gebracht werden, um das erste Kopplungselement mit dem zweiten Kopplungselement zu koppeln. Auf diese Weise kann jedes bewegbaren Greifelemente 12 mit dem Bewegungsteil 14 bewegungsgekoppelt werden.

Zur bewegbaren Lagerung des Bewegungsteils 14 in dem Greifvorrichtungsgrundkörper 16 kann der Greifvorrichtungsgrundkörper 16 eine längliche Aussparung 30 aufweisen, in die das Bewegungsteil eingesetzt ist. Die Aussparung 30 kann in dem Greifvorrichtungsgrundkörper 16 angeordnet sein. Die Aussparung 30 dient als Führung zur linear bewegbaren Lagerung des Bewegungsteils 14. Die Aussparung 30 erstreckt sich insbesondere in der Bewegungsrichtung des Bewegungsteils.

Der Greifvorrichtungsgrundkörper 16 kann einen Unterteil 32 und einen Oberteil 34 aufweisen. Der Unterteil 32 und der Oberteil 34 bilden den Greifvorrichtungsgrundkörper 16. Beispielsweise können der Unterteil 32 und der Oberteil 34 miteinander verbunden, insbesondere verschraubt, werden, um den Greifvorrichtungsgrundkörper 16 zu bilden.

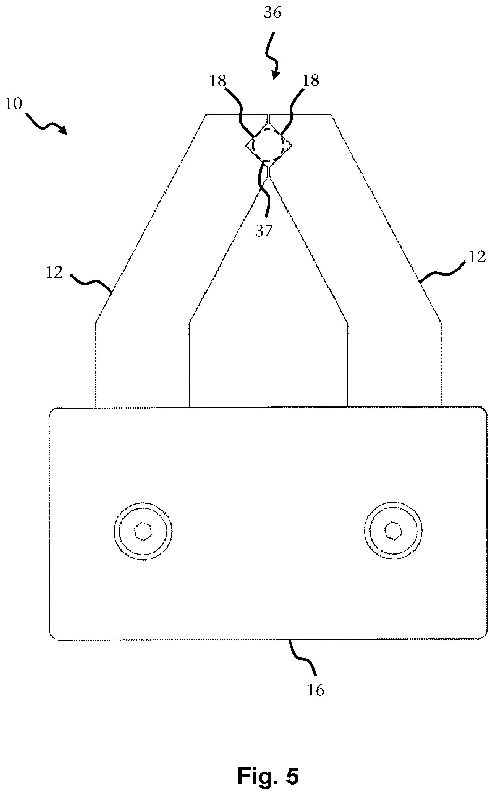

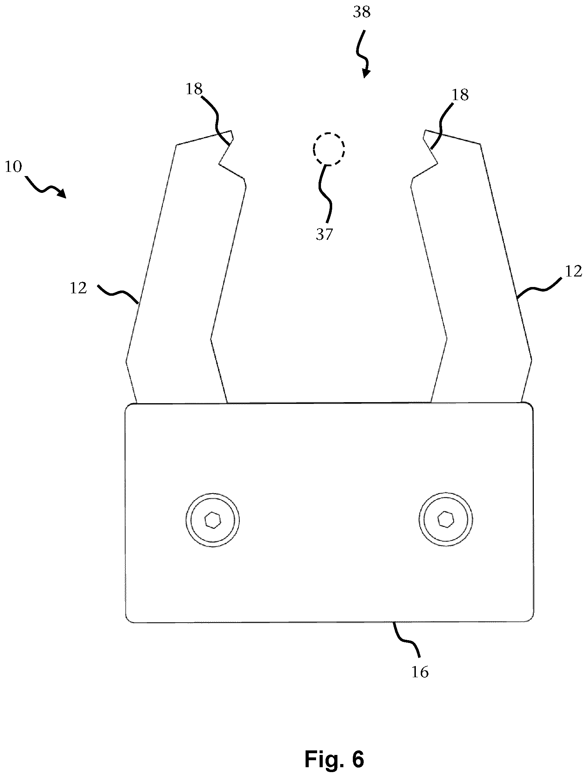

In den Figuren 5 und 6 ist dargestellt, wie mittels der Greifvorrichtung 10 ein Objekt 37 gegriffen und wieder freigegeben werden kann.

Die Greifelemente 12 sind insbesondere zwischen einer Greifstellung 36 und einer Freigabestellung 38 bewegbar. Die Greifstellung 36 dient zum Greifen des Objekts 37. Die Freigabestellung 38 dient zum Freigeben des Objekts 37. In Fig. 5 sind die Greifelemente 12 in der Greifstellung 36 angeordnet. In Fig. 6 sind die Greifelemente 12 in der Freigabestellung 38 angeordnet.

In der Greifstellung 36 sind die Greifabschnitte 18 der Greifelemente 12 näher aneinander angeordnet als in der Freigabestellung 38. In der Greifstellung 36 liegen die Greifabschnitte 18 an dem Objekt 37 an. In der Freigabestellung 38 sind die Greifelemente 12 so angeordnet, dass das Objekt 37 zwischen den Greifelementen 12 angeordnet werden kann. Insbesondere liegen in der Freigabestellung 38 die Greifabschnitte nicht an dem Objekt 37 an.

Zum Greifen des Objekts 37, werden die Greifelemente 12 von der Freigabestellung 38 in die Greifstellung 36 bewegt. Zum Freigeben des Objekts 37, werden die Greifelemente 12 von der Greifstellung 36 in die Freigabestellung 38 bewegt.

Zum Aktuieren der Bewegung der Greifelemente 12 zwischen der Greifstellung 36 und der Freigabestellung 38 kann das Bewegungsteil 14 magnetisch bewegt werden. Durch das magnetische Bewegen des Bewegungsteil 14 kann somit das Objekt 37 wahlweise gegriffen oder freigegeben werden. Das Bewegungsteil 14 ist insbesondere zwischen einer ersten Position und einer zweiten Position bewegbar. Das Bewegungsteil ist mit jedem bewegbaren Greifelement derart gekoppelt, dass die Greifelemente 12 in der Greifstellung 36 angeordnet sind, wenn das Bewegungsteil 14 in der ersten Position angeordnet ist, und die Greifelemente 12 in der Freigabestellung 38 angeordnet sind, wenn das Bewegungsteil 14 in der zweiten Position angeordnet ist. Die erste Position ist somit der Greifstellung 36 zugeordnet. Die zweite Position ist somit der Freigabestellung 38 zugeordnet. Durch Bewegen des Bewegungsteils 14 zwischen der ersten Position und der zweiten Position können die Greifelemente 12 zwischen der Greifstellung 36 und der Freigabestellung 38 bewegt werden.

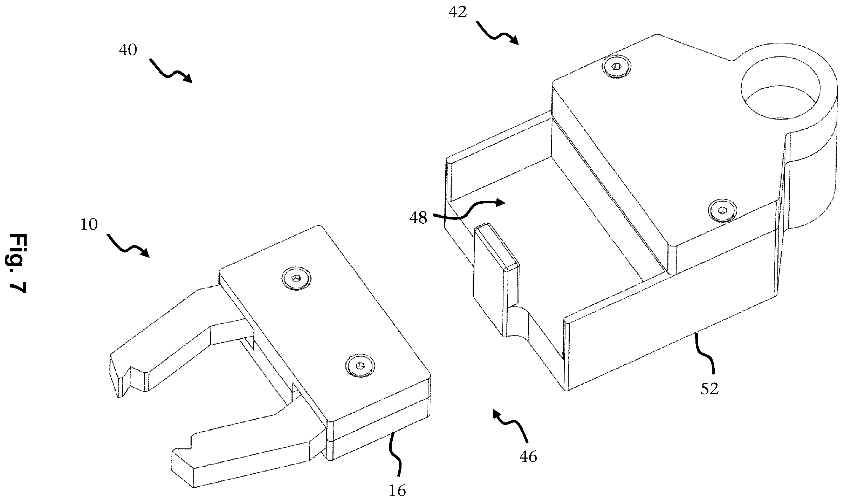

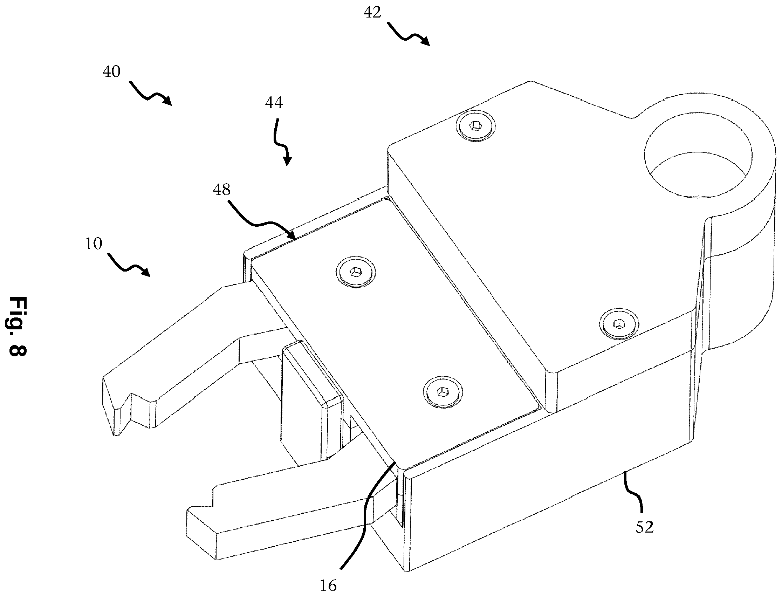

Die Figuren 7 und 8 zeigen eine erste Ausführungsform eines Greifsystems in seiner Gesamtheit mit der Bezugsziffer 40 bezeichnet.

Das Greifsystem 40 weist eine Greifvorrichtung 10 und eine Aktuierungsvorrichtung 42 auf. Die Greifvorrichtung 10 kann entsprechend der Greifvorrichtung 10 aus den Figuren 1 bis 6 ausgestaltet sein. Die Aktuierungsvorrichtung 42 dient zum Aktuieren der Greifvorrichtung 10. Insbesondere ist die Aktuierungsvorrichtung 42 dazu eingerichtet, das Bewegungsteil 14 zu bewegen.

Die Greifvorrichtung 10 ist mit der Aktuierungsvorrichtung 42 koppelbar. Wenn die Greifvorrichtung 10 mit der Aktuierungsvorrichtung 42 gekoppelt ist, befinden sich die Greifvorrichtung 10 und die Aktuierungsvorrichtung 42 in einem gekoppelten Zustand 44. In dem gekoppelten Zustand 44 ist die Greifvorrichtung 10 in einer definierten Lage relativ zu der Aktuierungsvorrichtung 42 angeordnet. In Fig. 8 sind die Greifvorrichtung 10 und die Aktuierungsvorrichtung 42 in dem gekoppelten Zustand 44 dargestellt. Wenn die Greifvorrichtung 10 mit der Aktuierungsvorrichtung 42 nicht gekoppelt ist, befinden sich die Greifvorrichtung 10 und die Aktuierungsvorrichtung 42 in einem entkoppelten Zustand 46. In Fig. 7 sind die Greifvorrichtung 10 und die Aktuierungsvorrichtung 42 in dem entkoppelten Zustand 46 dargestellt.

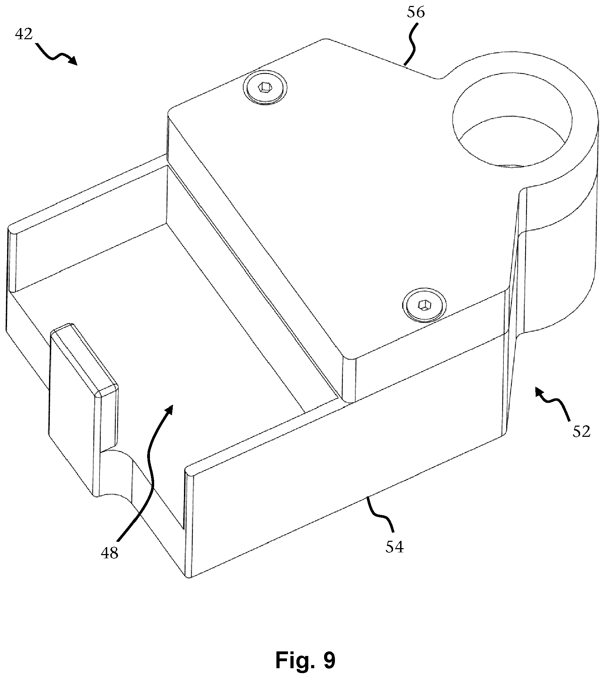

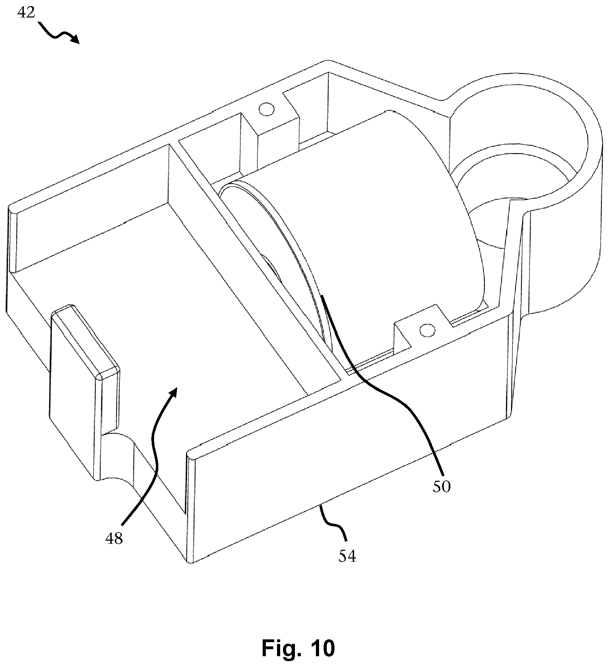

In den Figuren 9 und 10 ist die Aktuierungsvorrichtung 42 des Greifsystems 40 im Detail dargestellt.

Die Aktuierungsvorrichtung 42 weist eine Aufnahme 48 auf. Die Aufnahme 48 ist derart ausgebildet, dass die Greifvorrichtung 10 in die Aufnahme 48 eingesetzt werden kann. Insbesondere kann die Aufnahme 48 derart ausgebildet sein, dass darin der Greifvorrichtungsgrundkörper 16 aufgenommen werden kann. Beispielsweise kann die Aufnahme 48 dazu an die Form des Greifvorrichtungsgrundkörpers 16 angepasst sein. Die Greifvorrichtung 10 kann dann in die Aufnahme 48 eingesetzt und aus dieser auch wieder entnommen werden.

Wenn die Greifvorrichtung 10 in die Aufnahme 48 eingesetzt ist, ist die Greifvorrichtung 10 in der definierten Lage relativ zu der Aktuierungsvorrichtung 42 angeordnet. Mit anderen Worten kann die Greifvorrichtung 10 zum Koppeln mit der Aktuierungsvorrichtung 42 in die Aufnahme 48 eingesetzt werden. Die Aktuierungsvorrichtung 42 und/oder die Greifvorrichtung 10 können zusätzliche Haltemittel oder Befestigungsmittel aufweisen, mittels denen die Greifvorrichtung 10 in der Aufnahme 48 gehalten wird oder darin befestigt wird.

Die Aktuierungsvorrichtung 42 weist des Weiteren eine Magneteinrichtung 50 auf. Die Magneteinrichtung 50 dient zum magnetischen Bewegen des Bewegungsteils 14. Insbesondere kann die Magneteinrichtung 50 das Bewegungsteil magnetisch zwischen der ersten Position und der zweiten Position bewegen. Im gekoppelten Zustand, insbesondere wenn die Greifvorrichtung in die Aufnahme 48 eingesetzt ist, ist die Greifvorrichtung 10 so angeordnet, dass die Magneteinrichtung 50 das Bewegungsteil 14 magnetisch bewegen kann.

Zum magnetischen Bewegen kann die Magneteinrichtung 50 beispielsweise ein definiertes Magnetfeld erzeugen bzw. bereitstellen. Durch Wechselwirkung mit diesem Magnetfeld wir das Bewegungsteil 14 magnetisch bewegt. Je nach Ausrichtung des Magnetfeldes kann das Bewegungsteil 14 in die erste Position oder in die zweite Position bewegt werden. Mit anderen Worten kann über die Ausrichtung des Magnetfeldes die Greifbewegung und die Freigabebewegung kontrolliert werden. Zum Wechseln zwischen der Greifbewegung und der Freigabebewegung kann das Magnetfeld beispielsweise umgepolt werden. Zum Erzeugen des magnetischen Feldes kann die Magneteinrichtung 50 beispielsweise eine Spule aufweisen. Die Ausrichtung des magnetischen Feldes kann über die Richtung des Stromflusses durch die Spule eingestellt werden.

Die Aktuierungsvorrichtung 42 kann des Weiteren einen Aktuierungsvorrichtungskörper 52 aufweisen. Der Aktuierungsvorrichtungskörper 52 dient als Grundkörper der Aktuierungsvorrichtung 42. Die Magneteinrichtung 50 ist vorzugsweise in dem Aktuierungsvorrichtungskörper 52 angeordnet. Dazu kann der Aktuierungsvorrichtungskörper 52 beispielsweise einen Innenraum aufweisen, in dem die Magneteinrichtung 50 angeordnet ist. Die Aufnahme 48 ist vorzugsweise an dem Aktuierungsvorrichtungskörper 52 angeordnet. Insbesondere kann der Aktuierungsvorrichtungskörper 52 die Aufnahme 48 ausbilden.

Der Aktuierungsvorrichtungskörper 52 kann ein Basiselement 54 und ein Deckelelement 56 aufweisen. Das Basiselement 54 und das Deckelelement 56 bilden den Aktuierungsvorrichtungskörper 52. Beispielsweise können das Basiselement 54 und das Deckelelement 56 miteinander verbunden, insbesondere verschraubt, werden, um den Aktuierungsvorrichtungskörper 52 zu bilden.

Das Basiselement 54 kann die Aufnahme 48 und den Innenraum ausbilden. Beispielsweise kann das Basiselement 54 als Gehäuse ausgebildet sein, das den Innenraum umgibt. Die Aufnahme 48 kann an einer Außenseite des Basiselement 54 angeordnet sein. Das Deckelelement 56 kann als Deckel für das Basiselement dienen. Insbesondere kann das Deckelelement 56 dazu dienen, den Innenraum zu verschließen.

Das Greifsystem 40 kann grundsätzlich eine Mehrzahl von Greifvorrichtungen aufweisen. Jede Greifvorrichtung kann entsprechend der Greifvorrichtung 10 aus den Figuren 1 bis 6 ausgebildet sein. Jede Greifvorrichtung kann für einen bestimmten Anwendungsfall ausgebildet sein. Beispielsweise kann jede Greifvorrichtung zum Greifen eines bestimmten Objekts ausgebildet sein. Zum Beispiel kann eine erste Greifvorrichtung für ein erstes Objekt und eine zweite Greifvorrichtung für ein zweites Objekt vorgesehen sein.

Jede Greifvorrichtung kann mit Aktuierungsvorrichtung 42 wahlweise gekoppelt werden. Insbesondere kann jede Greifvorrichtung wahlweise in die Aufnahme 48 der Aktuierungsvorrichtung 42 eingesetzt werden. Auf diese Weise kann die Aktuierungsvorrichtung 42 dann je nach Anwendungsfall mit der entsprechenden Greifvorrichtung zusammenwirken und diese magnetisch Aktuieren.

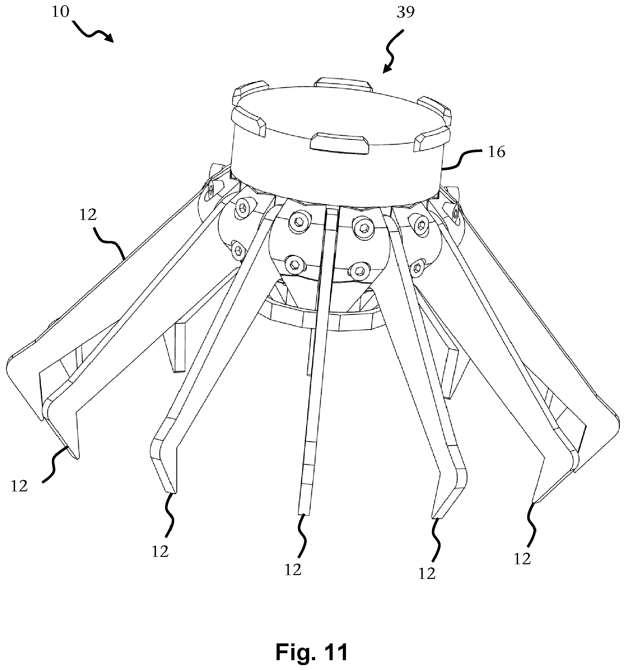

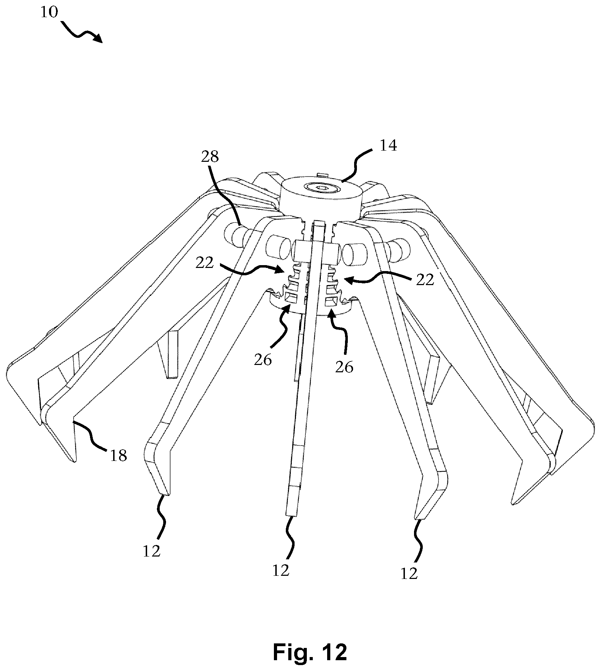

Die Figuren 11 und 12 zeigen eine zweite Ausführungsform der Greifvorrichtung 10. Der Greifvorrichtung der zweiten Ausführungsform entspricht im Wesentlichen der Greifvorrichtung der ersten Ausführungsform. Gleiche Elemente sind mit den gleichen Bezugszeichen gekennzeichnet und werden nicht näher erläutert. Die Greifvorrichtung der zweiten Ausführungsform unterscheidet sich von der Greifvorrichtung der ersten Ausführungsform im Wesentlichen darin, dass die Greifvorrichtung 10 der zweiten Ausführungsform zwölf Greifelemente 12 aufweist.

Die Greifelemente 12 sind symmetrisch um den Greifvorrichtungsgrundkörper 16, insbesondere symmetrisch um das Bewegungsteil 14, angeordnet. Das Bewegungsteil 14 ist im Wesentlichen zylindrisch ausgebildet. Das Bewegungsteil 14 ist axial beweglich in dem Greifvorrichtungsgrundkörper 16 gelagert. Die Greifelemente 12 sind an dem Greifvorrichtungsgrundkörpers 16 derart gelagert, dass die Greifelemente 12 aufeinander zu bewegt oder voneinander wegbewegt werden können.

Das erste Kopplungselement 22 jedes Greifelements 12 weist in dieser Ausführungsform eine Anzahl von Zähnen oder Vorsprüngen auf. Das Bewegungsteil 14 weist für jedes erstes Greifelement 12 ein entsprechendes zweites Kopplungselement 26 auf, das mit dem jeweiligen ersten Kopplungselement 22 bewegungsgekoppelt ist. Jedes zweite Kopplungselement 26 weist dazu eine Anzahl von Nuten oder Vertiefungen auf, in die die Zähne oder Vorsprünge des jeweiligen ersten Kopplungselements 22 eingreifen können.

Der Greifvorrichtungsgrundkörper 16 weist des Weiteren einen Kopplungsabschnitt 39. Der Kopplungsabschnitt 39 dient zur Kopplung mit einer Aktuierungsvorrichtung.

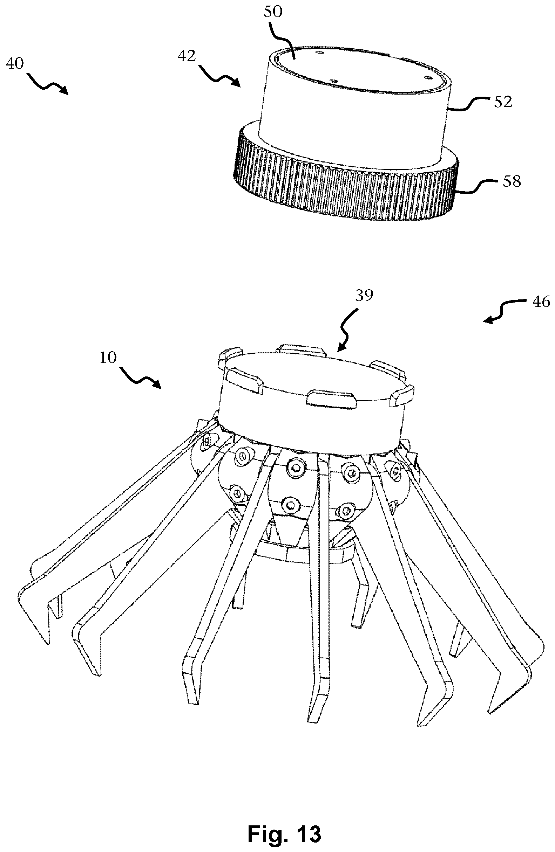

Die Figuren 13 bis 15 zeigen eine zweite Ausführungsform des Greifsystems 40. Das Greifsystem der zweiten Ausführungsform entspricht im Wesentlichen dem Greifsystem der ersten Ausführungsform. Gleiche Elemente sind mit den gleichen Bezugszeichen gekennzeichnet und werden nicht näher erläutert. Das Greifsystem der zweiten Ausführungsform unterscheidet sich von dem Greifsystem der ersten Ausführungsform im Wesentlichen in der Ausgestaltung der Greifvorrichtung 10 und der Ausgestaltung der Aktuierungsvorrichtung 42. Insbesondere ist die Greifvorrichtung des Greifsystems 40 gemäß der zweiten Ausführungsform entsprechend der Greifvorrichtung 10 der zweiten Ausführungsform aus den Figuren 11 und 12 ausgestaltet.

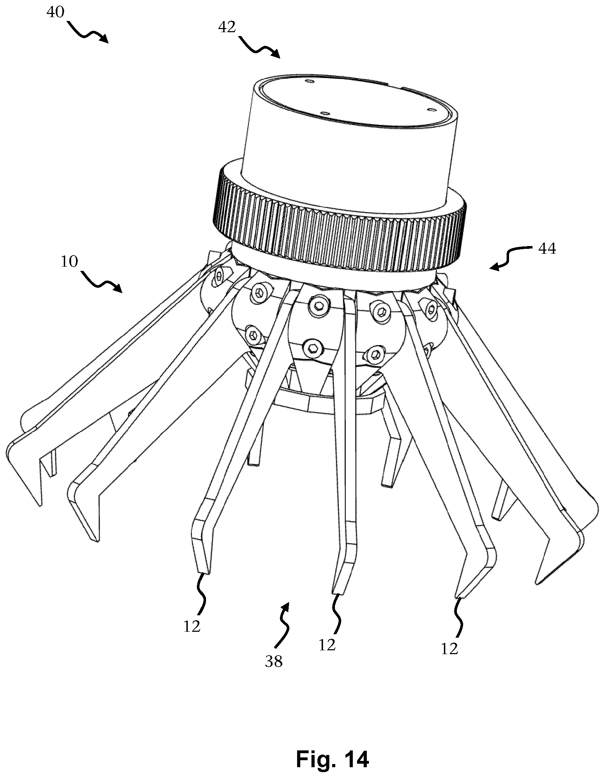

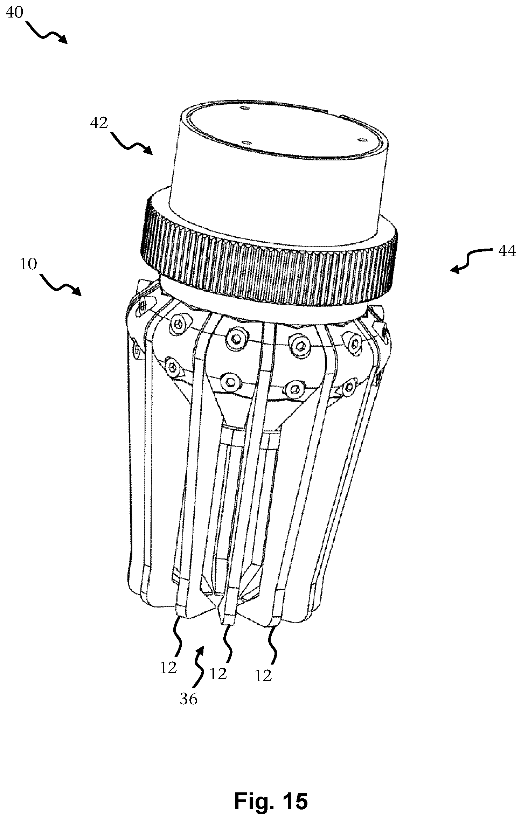

In Fig. 13 sind die Greifvorrichtung 10 und die Aktuierungsvorrichtung 42 in dem entkoppelten Zustand 46 dargestellt. In Fig. 14 sind die Greifvorrichtung 10 und die Aktuierungsvorrichtung 42 in dem gekoppelten Zustand 44 dargestellt. In Fig. 13 und 14 sind die Greifelemente 12 der Greifvorrichtung 10 in der Freigabestellung 38 angeordnet. In Fig. 15 sind die Greifelemente 12 der Greifvorrichtung 10 in der Greifstellung 36 angeordnet.

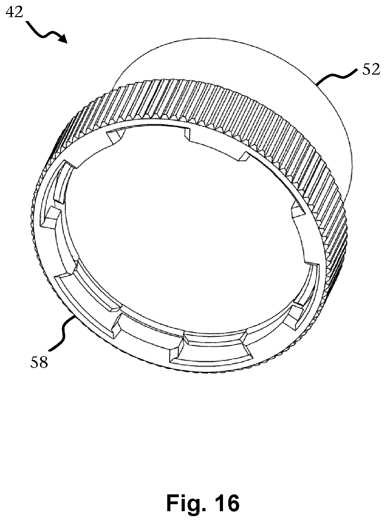

In Fig. 16 ist die Aktuierungsvorrichtung 42 des Greifsystems 40 der zweiten Ausführungsform im Detail dargestellt. Die Aktuierungsvorrichtung 42 der zweiten Ausführungsform weist zusätzlich eine Drehhülse 58. Die Drehhülse 58 ist an dem Aktuierungsvorrichtungskörper 52 drehbar gelagert. Die Drehhülse 58 kann mit dem Kopplungsabschnitt 39 gekoppelt werden, um die Greifvorrichtung 10 mit der Aktuierungsvorrichtung 42 zu koppeln. Die Drehhülse 58 und der Kopplungsabschnitt 39 können dazu beispielsweise als Bajonett-Verschluss ausgestaltet sein. Die Drehhülse 58 und der Kopplungsabschnitt 39 können beispielsweise jeweils eine Mehrzahl von korrespondierenden Kopplungsvorsprüngen aufweisen, die durch Drehung der Drehhülse 58 in oder außer Eingriff miteinander bringbar sind.

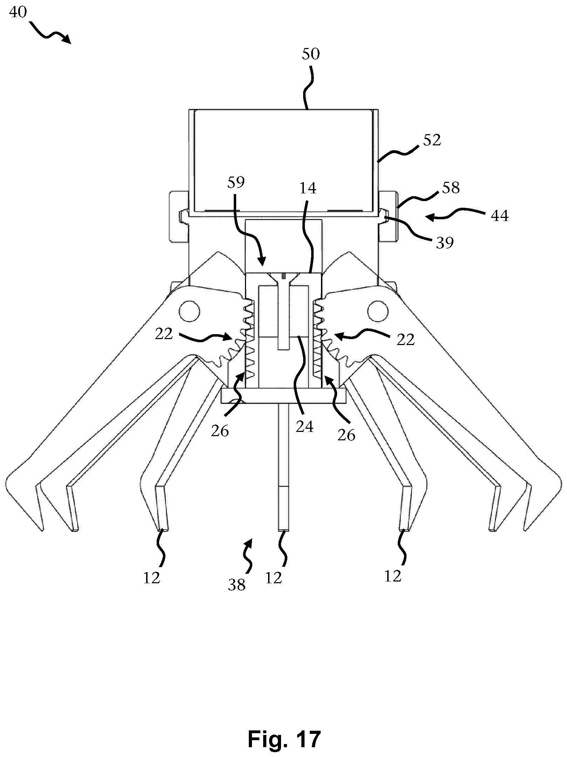

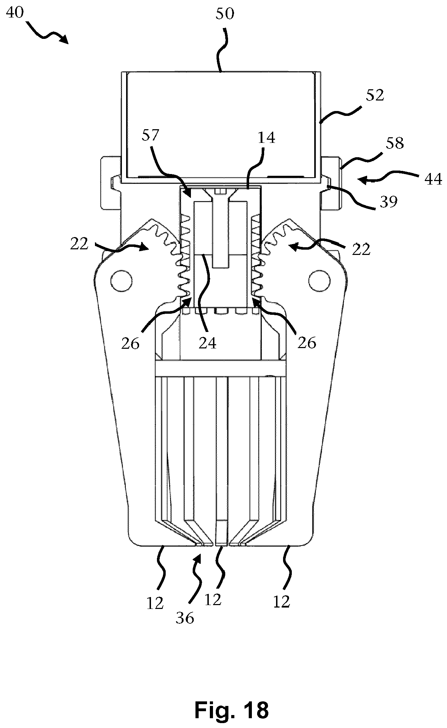

In den Figuren 17 und 18 ist die Anordnung der Komponenten des Greifsystems 40, insbesondere der Greifvorrichtung 10, dargestellt, wenn die Greifelemente 12 in der Freigabestellung 38 (siehe Fig. 17) oder der Greifstellung 36 (siehe Fig. 18) angeordnet sind.

In Fig. 17 ist jedes Greifelement in der Freigabestellung 38 angeordnet und das Bewegungsteil 14 in der zweiten Position angeordnet. Zum Kennzeichnen der zweiten Position ist in Fig. 17 das Bezugszeichen 59 verwendet. In Fig. 18 ist jedes Greifelement in der Greifstellung 36 angeordnet und das Bewegungsteil 14 in der ersten Position angeordnet. Zum Kennzeichnen der ersten Position ist in Fig. 18 das Bezugszeichen 57 verwendet. In dem Bewegungsteil 14 ist ein magnetisches Element 24 angeordnet.

Zum Bewegen des Bewegungsteils 14 in die erste Position 57 kann mittels der Magneteinrichtung 50 ein Magnetfeld erzeugt werden, das mit dem magnetischen Element 24 derart zusammenwirkt, dass das Bewegungsteils 14 in Richtung der ersten Position 57 bewegt wird.

Zum Bewegen des Bewegungsteils 14 in die zweite Position 59 kann mittels der Magneteinrichtung 50 ein Magnetfeld erzeugt werden, das mit dem magnetischen Element 24 derart zusammenwirkt, dass das Bewegungsteils 14 in Richtung der zweiten Position 59 bewegt wird.

Im gekoppelten Zustand 44 des Greifsystems 40 kann das Bewegungsteil 14 in der ersten Position 57 näher an der Magneteinrichtung 50 angeordnet sein als in der zweiten Position 59. Die Magneteinrichtung 50 kann dann insbesondere zum Bewegen des Bewegungsteils 14 in die erste Position 57 ein anziehendes Magnetfeld und zum Bewegen des Bewegungsteils 14 in die zweite Position 59 ein abstoßendes Magnetfeld erzeugen.

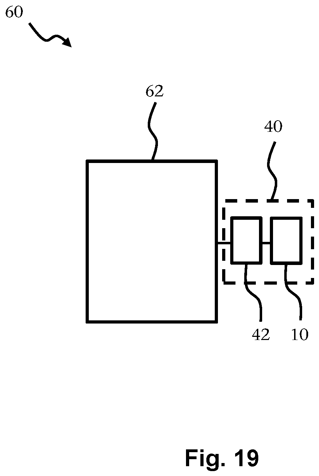

Fig. 19 zeigt eine Ausführungsform einer Handhabungseinrichtung in ihrer Gesamtheit mit der Bezugsziffer 60 bezeichnet. Die Handhabungseinrichtung 60 dient zum Handhaben von Objekten.

Die Handhabungseinrichtung 60 weist ein Greifsystem 40 auf. Das Greifsystem 40 kann entsprechend dem Greifsystem 40 gemäß der ersten Ausführungsform aus den Figuren 7 bis 10 oder entsprechend dem Greifsystem 40 gemäß der zweiten Ausführungsform aus den Figuren 13 bis 18 ausgestaltet sein. Insbesondere kann die Handhabungseinrichtung 60 das Greifsystem 40 dazu verwenden, um Objekte zu greifen oder freizugeben.

Die Handhabungseinrichtung 60 weist des Weiteren eine Trägerstruktur 62 auf. Die Trägerstruktur 62 ist vorzugsweise mehrachsig ausgebildet. Die Trägerstruktur 62 dient zum Tragen der Aktuierungsvorrichtung 42 des Greifsystems. Insbesondere kann die Trägerstruktur 62 dazu ausgebildet sein, die Aktuierungsvorrichtung 42 im Raum zu bewegen. Die Aktuierungsvorrichtung an einem Ende der mehrachsigen Trägerstruktur 62 angeordnet sein. Insbesondere kann die Trägerstruktur 62 einen mehrachsigen, bewegbaren Arm aufweisen, wobei die Aktuierungsvorrichtung 42 an einem Ende des Arms angeordnet, insbesondere montiert, sein kann.

Wenn die Aktuierungsvorrichtung 42 mit der Greifvorrichtung 10 gekoppelt ist und die Greifvorrichtung 10 ein Objekt greift, kann das Objekt im Raum bewegt werden, indem die Trägerstruktur 62 die Aktuierungsvorrichtung 42 bewegt.

Die Handhabungseinrichtung 60 kann Teil eines Verpackungssystems sein. Insbesondere kann die Handhabungseinrichtung 60 Teil einer kosmetischen oder pharmazeutischen Verpackungsanlage oder Abfüllanlage sein, wobei mittels der Handhabungseinrichtung kosmetische oder pharmazeutische Objekte, wie zu Beispiel kosmetische oder pharmazeutische Behälter, gehandhabt werden.

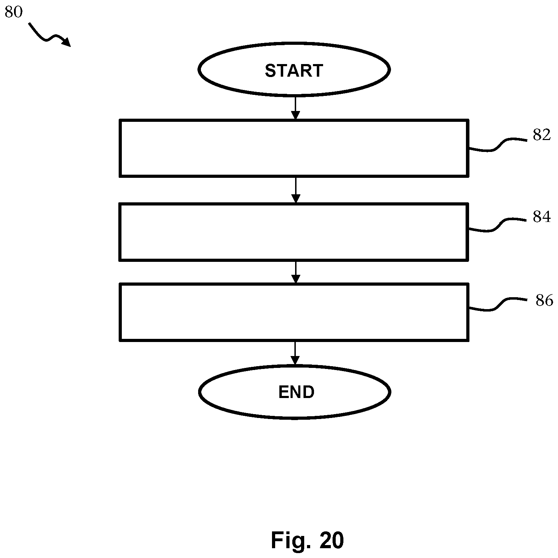

Fig. 20 zeigt eine Ausführungsform eines Verfahrens zum Herstellen einer Greifvorrichtung in seiner Gesamtheit mit der Bezugsziffer 80 bezeichnet. Mittels des Verfahrens 80 kann insbesondere die Greifvorrichtung 10 gemäß der ersten oder zweiten Ausführungsform hergestellt werden.

In einem ersten Schritt 82 des Verfahrens 80 wird ein Greifvorrichtungsgrundkörper 16 bereitgestellt.

In einem weiteren Schritt 84 des Verfahrens 80 werden mindestens zwei Greifelemente 12 an und/oder in dem Greifvorrichtungsgrundkörper 16 angeordnet. Insbesondere können eine Mehrzahl von Greifelementen 12, beispielsweise zwölf Greifelemente12, an und/oder in dem Greifvorrichtungsgrundkörper 16 angeordnet werden. Zumindest eines der Greifelemente 12 kann, vorzugsweise rotatorisch, bewegbar sein. Insbesondere kann jedes Greifelemente 12, vorzugsweise rotatorisch, bewegbar sein.

In einem weiteren Schritt 86 des Verfahrens 80 wird ein Bewegungsteil 14 an und/oder in dem Greifvorrichtungsgrundkörper 16 angeordnet, wobei das Bewegungsteil 14 magnetisch bewegbar ist, wobei das Bewegungsteil 14 mit dem zumindest einen bewegbaren Greifelement 12 derart gekoppelt wird, dass eine Bewegung des Bewegungsteils 14 auf eine Bewegung des zumindest einen bewegbaren Greifelements 12 übertragbar ist.

Jedes bewegbare Greifelemente 12 kann bezüglich des Greifvorrichtungsgrundkörpers 16, insbesondere rotatorisch, bewegbar gelagert sein. Das Bewegungsteil 14 kann bezüglich des Greifvorrichtungsgrundkörpers 16, insbesondere translatorisch, bewegbar gelagert sein.

Der Greifvorrichtungsgrundkörper 16 und/oder die Greifelemente 12 können mittels eines additiven Verfahrens hergestellt werden. Insbesondere können der Unterteil 32 und der Oberteil 34 des Greifvorrichtungsgrundkörpers 16 mittels des additiven Verfahrens hergestellt werden. Der Greifvorrichtungsgrundkörper 16 und/oder die Greifelemente 12 werden insbesondere aus einem Kunststoff hergestellt.

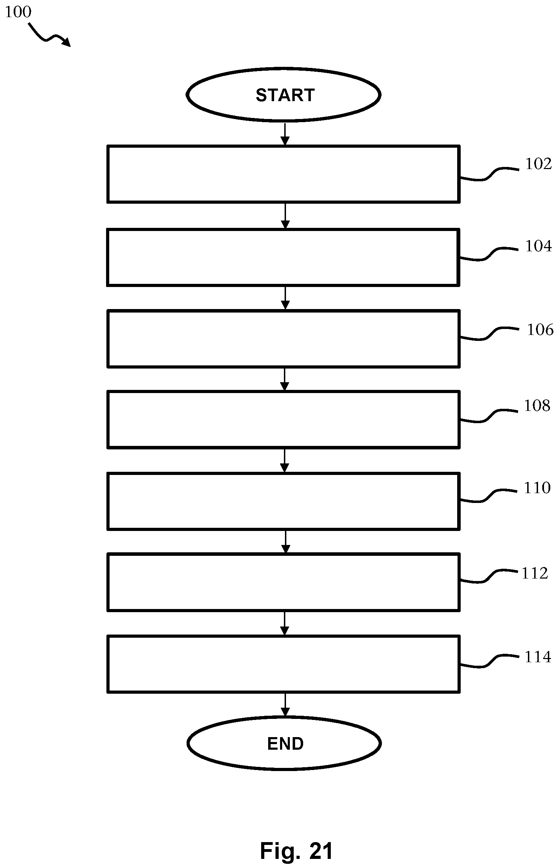

Fig. 21 zeigt eine Ausführungsform eines Verfahrens zum Handhaben von Objekten in seiner Gesamtheit mit der Bezugsziffer 100 bezeichnet. Die Objekte können insbesondere kosmetische oder pharmazeutische Objekte sein. Das Verfahren 100 kann insbesondere mittels des Greifsystems 40 gemäß der ersten Ausführungsform aus den Figuren 7 bis 10 oder des Greifsystems 40 gemäß der zweiten Ausführungsform aus den Figuren 13 bis 18 oder mittels der Handhabungseinrichtung 60 aus Fig. 11 durchgeführt werden.

In einem ersten Schritt 102 des Verfahrens 100 wird eine erste Greifvorrichtung 10 mit einer Aktuierungsvorrichtung 42 gekoppelt. Die erste Greifvorrichtung 10 dient zum Greifen eines ersten Objekts. Die erste Greifvorrichtung 10 weist mindestens zwei Greifelemente 12 und ein Bewegungsteil 14 auf, wobei zumindest eines der Greifelemente 12 bewegbar ist, wobei das Bewegungsteil 14 magnetisch bewegbar ist, wobei das Bewegungsteil 12 mit dem zumindest einen bewegbaren Greifelement 12 derart gekoppelt ist, dass eine Bewegung des Bewegungsteils 14 auf eine Bewegung des zumindest einen bewegbaren Greifelements 12 übertragbar ist. Insbesondere kann das zumindest eine bewegbare Greifelement 12 der ersten Greifvorrichtung 10 zwischen einer Greifstellung 36 zum Greifen des ersten Objekts und einer Freigabestellung 38 zum Freigeben des ersten Objekts bewegbar sein. Die erste Greifvorrichtung 10 kann insbesondere entsprechend der Greifvorrichtung 10 aus den Figuren 1 bis 6 ausgestaltet sein.

In einem weiteren Schritt 104 des Verfahrens 100 wird das Bewegungsteil 14 der ersten Greifvorrichtung 10 mittels einer Magneteinrichtung 50 der Aktuierungsvorrichtung 42 magnetisch bewegt, um das erste Objekt mit der ersten Greifvorrichtung 10 zu greifen oder freizugeben. Insbesondere wird dabei das Bewegungsteil 14 magnetisch bewegt, um das zumindest eine bewegbare Greifelement 12 der ersten Greifvorrichtung 10 zwischen der Greifstellung 36 und der Freigabestellung 38 zu bewegen.

In einem weiteren Schritt 106 des Verfahrens 100 wird die Aktuierungsvorrichtung 42 im Raum bewegt, während die erste Greifvorrichtung 10 mit der Aktuierungsvorrichtung 42 gekoppelt ist und das erste Objekt gegriffen ist. Beispielsweise kann die Handhabungseinrichtung 60 die Aktuierungsvorrichtung 42 mittels der Trägerstruktur 62 im Raum bewegen. Auf diese Weise kann das erste Objekt im Raum bewegt werden.

In einem weiteren Schritt 108 des Verfahrens 100 wird die erste Greifvorrichtung 10 von der Aktuierungsvorrichtung 42 entkoppelt.

In einem weiteren Schritt 110 des Verfahrens 100 wird eine zweite Greifvorrichtung 10 mit der Aktuierungsvorrichtung 42 gekoppelt. Die zweite Greifvorrichtung 10 dient zum Greifen eines zweiten Objekts. Die zweite Greifvorrichtung 10 weist mindestens zwei Greifelemente 12 und ein Bewegungsteil 14 auf, wobei zumindest eines der Greifelemente 12 bewegbar ist, wobei das Bewegungsteil 14 magnetisch bewegbar ist, wobei das Bewegungsteil 14 mit dem zumindest einen bewegbaren Greifelement 12 derart gekoppelt ist, dass eine Bewegung des Bewegungsteils 14 auf eine Bewegung des zumindest einen bewegbaren Greifelements 12 übertragbar ist. Insbesondere kann das zumindest eine bewegbare Greifelement 12 der zweiten Greifvorrichtung 10 zwischen einer Greifstellung 36 zum Greifen des zweiten Objekts und einer Freigabestellung 38 zum Freigeben des zweiten Objekts bewegbar sein. Die zweite Greifvorrichtung 10 kann insbesondere entsprechend der Greifvorrichtung 10 aus den Figuren 1 bis 6 ausgestaltet sein.

In einem weiteren Schritt 112 des Verfahrens 100 wird das Bewegungsteil 14 der zweiten Greifvorrichtung 10 mittels der Magneteinrichtung 50 der Aktuierungsvorrichtung 42 magnetisch bewegt, um das zweite Objekt mit der zweiten Greifvorrichtung 10 zu greifen oder freizugeben. Insbesondere wird dabei das Bewegungsteil 14 magnetisch bewegt, um das zumindest eine bewegbare Greifelement 12 der zweiten Greifvorrichtung 10 zwischen der Greifstellung 36 und der Freigabestellung 38 zu bewegen.

In einem weiteren Schritt 114 des Verfahrens 100 wird die Aktuierungsvorrichtung 42 im Raum bewegt, während die zweite Greifvorrichtung 10 mit der Aktuierungsvorrichtung 42 gekoppelt ist und das zweite Objekt gegriffen ist. Beispielsweise kann die Handhabungseinrichtung 60 die Aktuierungsvorrichtung 42 mittels der Trägerstruktur 62 im Raum bewegen. Auf diese Weise kann das zweite Objekt im Raum bewegt werden.

Das erste Objekt und das zweite Objekt können sich in Form und/oder Größe unterscheiden. Die Greifelemente 12, insbesondere die Greifabschnitte 18, der ersten und zweiten Greifvorrichtung 10 können an die Form und/oder Größe des jeweiligen Objekts angepasst sein. Mit anderen Worten können die erste und die zweite Greifvorrichtung 10 unterschiedliche Greifelemente 12 aufweisen.

Des Weiteren weist die vorliegende Offenbarung die folgenden Klauseln auf:
Klausel 1. Greifvorrichtung (10) zum Greifen eines Objekts, insbesondere eines kosmetischen oder pharmazeutischen Objekts, wobei die Greifvorrichtung (10) mindestens zwei Greifelemente (12) und ein Bewegungsteil (14) aufweist, wobei zumindest eines der Greifelemente (12) bewegbar ist, wobei das Bewegungsteil (14) magnetisch bewegbar ist, wobei das Bewegungsteil (14) mit dem zumindest einen bewegbaren Greifelement (12) derart gekoppelt ist, dass eine Bewegung des Bewegungsteils (14) auf eine Bewegung des zumindest einen bewegbaren Greifelements (12) übertragbar ist.
Klausel 2. Greifvorrichtung (10) nach Klausel 1, wobei das zumindest eine bewegbare Greifelement (12) zwischen einer Greifstellung (36) zum Greifen des Objekts und einer Freigabestellung (38) zum Freigeben des Objekts bewegbar ist.
Klausel 3. Greifvorrichtung (10) nach Klausel 2, wobei das Bewegungsteil (14) zwischen einer ersten Position und einer zweiten Position bewegbar ist, wobei das Bewegungsteil (14) mit dem zumindest einen bewegbaren Greifelement (12) derart gekoppelt ist, dass das zumindest eine bewegbare Greifelement (12) in der Greifstellung (36) angeordnet ist, wenn das Bewegungsteil (14) in der ersten Position angeordnet ist, und das zumindest eine bewegbare Greifelement (12) in der Freigabestellung (38) angeordnet ist, wenn das Bewegungsteil (14) in der zweiten Position angeordnet ist.
Klausel 4. Greifvorrichtung (10) nach einer der Klauseln 1 bis 3, wobei das Bewegungsteil (14) zumindest ein magnetisches Element (24, 24') aufweist.
Klausel 5. Greifvorrichtung (10) nach einer der Klauseln 1 bis 4, wobei das zumindest eine bewegbare Greifelement (12) ein erstes Kopplungselement (22) aufweist, wobei das Bewegungsteil (14) ein zweites Kopplungselement (26) aufweist, wobei das erste Kopplungselement (22) mit dem zweiten Kopplungselement (26) gekoppelt ist.
Klausel 6. Greifvorrichtung (10) nach einer der Klauseln 1 bis 5, wobei die Greifvorrichtung (10) einen Greifvorrichtungsgrundkörper (16) aufweist, wobei das zumindest eine bewegbare Greifelement (12) bezüglich des Greifvorrichtungsgrundkörpers (16) bewegbar gelagert ist, und wobei das Bewegungsteil (14) bezüglich des Greifvorrichtungsgrundkörper (16) bewegbar gelagert ist.
Klausel 7. Greifvorrichtung (10) nach einer der Klauseln 1 bis 6, wobei der Greifvorrichtungsgrundkörper (16) und/oder die Greifelemente (12) mittels eines additiven Verfahrens hergestellt sind.
Klausel 8. Greifvorrichtung (10) nach einer der Klauseln 1 bis 7, wobei jedes der Greifelemente (12) bewegbar ist, wobei das Bewegungsteil (14) mit jedem Greifelement (12) derart gekoppelt ist, dass eine Bewegung des Bewegungsteils (14) auf eine Bewegung des jeweiligen Greifelements (12) übertragbar ist.
Klausel 9. Greifsystem (40) mit der Greifvorrichtung nach einer der Klauseln 1 bis 8 und einer Aktuierungsvorrichtung (42), wobei die Aktuierungsvorrichtung (42) eine Magneteinrichtung (50) zum magnetischen Bewegen des Bewegungsteils (14) aufweist.
Klausel 10. Greifsystem (40) nach Klausel 9, wobei die Greifvorrichtung (10) mit der Aktuierungsvorrichtung (42) koppelbar ist.
Klausel 11. Greifsystem (40) nach Klausel 9 oder 10, wobei die Aktuierungsvorrichtung (42) eine Aufnahme (48) aufweist, wobei die Greifvorrichtung (10) in die Aufnahme (48) einsetzbar ist.
Klausel 12. Greifsystem (40) nach einer der Klauseln 9 bis 11, wobei das Greifsystem (40) eine Mehrzahl von Greifvorrichtungen (10) aufweist.
Klausel 13. Greifsystem (40) nach Klausel 12, wobei jede Greifvorrichtung (10) wahlweise mit der Aktuierungsvorrichtung (42) koppelbar ist, insbesondere wobei jede Greifvorrichtung (10) wahlweise in die Aufnahme (48) der Aktuierungsvorrichtung (42) einsetzbar ist.
Klausel 14. Handhabungseinrichtung (60) zum Handhaben von Objekten, wobei die Handhabungseinrichtung (60) das Greifsystem (40) nach einer der Klauseln 9 bis 13 aufweist.
Klausel 15. Handhabungseinrichtung (60) nach Klausel 14, wobei die Handhabungseinrichtung (60) eine mehrachsige Trägerstruktur (62) aufweist, wobei die Aktuierungsvorrichtung (42) an einem Ende der mehrachsigen Trägerstruktur (62) angeordnet ist.
Klausel 16. Verfahren (80) zum Herstellen einer Greifvorrichtung (10), mit den folgenden Schritten:
   - Bereitstellen (82) eines Greifvorrichtungsgrundkörpers (16);
   - Erstes Anordnen (84) von mindestens zwei Greifelementen (12) an und/oder in dem Greifvorrichtungsgrundkörper (16), wobei zumindest eines der Greifelemente (12) bewegbar ist;
   - Zweites Anordnen (86) eines Bewegungsteils (14) an und/oder in dem Greifvorrichtungsgrundkörper (16), wobei das Bewegungsteil (14) magnetisch bewegbar ist,
   wobei das Bewegungsteil (14) mit dem zumindest einen bewegbaren Greifelement (12) derart gekoppelt wird, dass eine Bewegung des Bewegungsteils (14) auf eine Bewegung des zumindest einen bewegbaren Greifelements (12) übertragbar ist.
Klausel 17. Verfahren (80) nach Klausel 16, wobei der Greifvorrichtungsgrundkörper (16) und/oder die Greifelemente (12) mittels eines additiven Verfahrens hergestellt werden.
Klausel 18. Verfahren (100) zum Handhaben von Objekten, insbesondere von kosmetischen oder pharmazeutischen Objekten, mit den folgenden Schritten:
   - Erstes Koppeln (102) einer ersten Greifvorrichtung (10) zum Greifen eines ersten Objekts mit einer Aktuierungsvorrichtung (42), wobei die erste Greifvorrichtung (10) mindestens zwei Greifelemente (12) und ein Bewegungsteil (14) aufweist, wobei zumindest eines der Greifelemente (12) bewegbar ist, wobei das Bewegungsteil (14) magnetisch bewegbar ist, wobei das Bewegungsteil (14) mit dem zumindest einen bewegbaren Greifelement (12) derart gekoppelt ist, dass eine Bewegung des Bewegungsteils (14) auf eine Bewegung des zumindest einen bewegbaren Greifelements (12) übertragbar ist; und
   - Erstes magnetisches Bewegen (104) des Bewegungsteils (14) der ersten Greifvorrichtung (10) mittels einer Magneteinrichtung (50) der Aktuierungsvorrichtung (42), um das erste Objekt mit der ersten Greifvorrichtung (10) zu greifen oder freizugeben.
Klausel 19. Verfahren (100) nach Klausel 18, wobei das Verfahren (100) des Weiteren den folgenden Schritt aufweist:
   - Erstes Bewegen (106) der Aktuierungsvorrichtung (42) im Raum, während die erste Greifvorrichtung (10) mit der Aktuierungsvorrichtung (42) gekoppelt ist und das erste Objekt gegriffen ist.
Klausel 20. Verfahren (100) nach Klausel 18 oder 19, wobei das zumindest eine bewegbare Greifelement (12) der ersten Greifvorrichtung (10) zwischen einer Greifstellung (36) zum Greifen des ersten Objekts und einer Freigabestellung (38) zum Freigeben des ersten Objekts bewegbar ist, wobei in dem Schritt des ersten magnetischen Bewegens (104) das Bewegungsteil (14) magnetisch bewegt wird, um das zumindest eine bewegbare Greifelement (12) der ersten Greifvorrichtung (10) zwischen der Greifstellung (36) und der Freigabestellung (38) zu bewegen.
Klausel 21. Verfahren (100) nach einer der Klauseln 18 bis 20, wobei das Verfahren (100) die folgenden Schritte aufweist:
   - Entkoppeln (108) der ersten Greifvorrichtung von der Aktuierungsvorrichtung;
   - Zweites Koppeln (110) einer zweiten Greifvorrichtung (10) zum Greifen eines zweiten Objekts mit der Aktuierungsvorrichtung (42), wobei die zweite Greifvorrichtung (10) mindestens zwei Greifelemente (12) und ein Bewegungsteil (14) aufweist, wobei zumindest eines der Greifelemente (12) bewegbar ist, wobei das Bewegungsteil (14) magnetisch bewegbar ist, wobei das Bewegungsteil (14) mit dem zumindest einen bewegbaren Greifelement (12) derart gekoppelt ist, dass eine Bewegung des Bewegungsteils (14) auf eine Bewegung des zumindest einen bewegbaren Greifelements (12) übertragbar ist; und
   - Zweites magnetisches Bewegen (112) des Bewegungsteils der zweiten Greifvorrichtung (10) mittels der Magneteinrichtung (50) der Aktuierungsvorrichtung (42), um das zweite Objekt mit der zweiten Greifvorrichtung (10) zu greifen oder freizugeben.
Klausel 22. Verfahren (100) nach Klausel 21, wobei das Verfahren (100) des Weiteren den folgenden Schritt aufweist:
   - Zweites Bewegen (114) der Aktuierungsvorrichtung (42) im Raum, während die zweite Greifvorrichtung (10) mit der Aktuierungsvorrichtung (42) gekoppelt ist und das zweite Objekt gegriffen ist.
Klausel 23. Verfahren (100) nach Klausel 21 oder 22, wobei das zumindest eine bewegbare Greifelement (12) der zweiten Greifvorrichtung (10) zwischen einer Greifstellung (36) zum Greifen des zweiten Objekts und einer Freigabestellung (38) zum Freigeben des zweiten Objekts bewegbar ist, wobei in dem Schritt des zweiten magnetischen Bewegens das Bewegungsteil (14) magnetisch bewegt wird, um das zumindest eine bewegbare Greifelement (12) der zweiten Greifvorrichtung (10) zwischen der der Greifstellung (36) und der Freigabestellung (38) zu bewegen.

## Patentansprüche

1. Greifvorrichtung (10) zum Greifen eines Objekts, insbesondere eines kosmetischen oder pharmazeutischen Objekts, wobei die Greifvorrichtung (10) mindestens zwei Greifelemente (12) und ein Bewegungsteil (14) aufweist, wobei zumindest eines der Greifelemente (12) bewegbar ist, wobei das Bewegungsteil (14) magnetisch bewegbar ist, wobei das Bewegungsteil (14) mit dem zumindest einen bewegbaren Greifelement (12) derart gekoppelt ist, dass eine Bewegung des Bewegungsteils (14) auf eine Bewegung des zumindest einen bewegbaren Greifelements (12) übertragbar ist.

2. Greifvorrichtung (10) nach Anspruch 1, wobei das zumindest eine bewegbare Greifelement (12) zwischen einer Greifstellung (36) zum Greifen des Objekts und einer Freigabestellung (38) zum Freigeben des Objekts bewegbar ist.

3. Greifvorrichtung (10) nach Anspruch 2, wobei das Bewegungsteil (14) zwischen einer ersten Position und einer zweiten Position bewegbar ist, wobei das Bewegungsteil (14) mit dem zumindest einen bewegbaren Greifelement (12) derart gekoppelt ist, dass das zumindest eine bewegbare Greifelement (12) in der Greifstellung (36) angeordnet ist, wenn das Bewegungsteil (14) in der ersten Position angeordnet ist, und das zumindest eine bewegbare Greifelement (12) in der Freigabestellung (38) angeordnet ist, wenn das Bewegungsteil (14) in der zweiten Position angeordnet ist.

4. Greifvorrichtung (10) nach einem der Ansprüche 1 bis 3, wobei das Bewegungsteil (14) zumindest ein magnetisches Element (24, 24') aufweist.

5. Greifvorrichtung (10) nach einem der Ansprüche 1 bis 4, wobei das zumindest eine bewegbare Greifelement (12) ein erstes Kopplungselement (22) aufweist, wobei das Bewegungsteil (14) ein zweites Kopplungselement (26) aufweist, wobei das erste Kopplungselement (22) mit dem zweiten Kopplungselement (26) gekoppelt ist.

6. Greifvorrichtung (10) nach einem der Ansprüche 1 bis 5, wobei die Greifvorrichtung (10) einen Greifvorrichtungsgrundkörper (16) aufweist, wobei das zumindest eine bewegbare Greifelement (12) bezüglich des Greifvorrichtungsgrundkörpers (16) bewegbar gelagert ist, und wobei das Bewegungsteil (14) bezüglich des Greifvorrichtungsgrundkörper (16) bewegbar gelagert ist.

7. Greifvorrichtung (10) nach einem der Ansprüche 1 bis 6, wobei der Greifvorrichtungsgrundkörper (16) und/oder die Greifelemente (12) mittels eines additiven Verfahrens hergestellt sind.

8. Greifvorrichtung (10) nach einem der Ansprüche 1 bis 7, wobei jedes der Greifelemente (12) bewegbar ist, wobei das Bewegungsteil (14) mit jedem Greifelement (12) derart gekoppelt ist, dass eine Bewegung des Bewegungsteils (14) auf eine Bewegung des jeweiligen Greifelements (12) übertragbar ist.

9. Greifsystem (40) mit der Greifvorrichtung nach einem der Ansprüche 1 bis 8 und einer Aktuierungsvorrichtung (42), wobei die Aktuierungsvorrichtung (42) eine Magneteinrichtung (50) zum magnetischen Bewegen des Bewegungsteils (14) aufweist.

10. Greifsystem (40) nach Anspruch 9, wobei die Greifvorrichtung (10) mit der Aktuierungsvorrichtung (42) koppelbar ist.

11. Greifsystem (40) nach Anspruch 9 oder 10, wobei die Aktuierungsvorrichtung (42) eine Aufnahme (48) aufweist, wobei die Greifvorrichtung (10) in die Aufnahme (48) einsetzbar ist.

12. Greifsystem (40) nach einem der Ansprüche 9 bis 11, wobei das Greifsystem (40) eine Mehrzahl von Greifvorrichtungen (10) aufweist.

13. Handhabungseinrichtung (60) zum Handhaben von Objekten, wobei die Handhabungseinrichtung (60) das Greifsystem (40) nach einem der Ansprüche 9 bis 12 aufweist.

14. Verfahren (80) zum Herstellen einer Greifvorrichtung (10), mit den folgenden Schritten:
- Bereitstellen (82) eines Greifvorrichtungsgrundkörpers (16);
- Erstes Anordnen (84) von mindestens zwei Greifelementen (12) an und/oder in dem Greifvorrichtungsgrundkörper (16), wobei zumindest eines der Greifelemente (12) bewegbar ist;
- Zweites Anordnen (86) eines Bewegungsteils (14) an und/oder in dem Greifvorrichtungsgrundkörper (16), wobei das Bewegungsteil (14) magnetisch bewegbar ist,
wobei das Bewegungsteil (14) mit dem zumindest einen bewegbaren Greifelement (12) derart gekoppelt wird, dass eine Bewegung des Bewegungsteils (14) auf eine Bewegung des zumindest einen bewegbaren Greifelements (12) übertragbar ist.

15. Verfahren (100) zum Handhaben von Objekten, insbesondere von kosmetischen oder pharmazeutischen Objekten, mit den folgenden Schritten:
- Erstes Koppeln (102) einer ersten Greifvorrichtung (10) zum Greifen eines ersten Objekts mit einer Aktuierungsvorrichtung (42), wobei die erste Greifvorrichtung (10) mindestens zwei Greifelemente (12) und ein Bewegungsteil (14) aufweist, wobei zumindest eines der Greifelemente (12) bewegbar ist, wobei das Bewegungsteil (14) magnetisch bewegbar ist, wobei das Bewegungsteil (14) mit dem zumindest einen bewegbaren Greifelement (12) derart gekoppelt ist, dass eine Bewegung des Bewegungsteils (14) auf eine Bewegung des zumindest einen bewegbaren Greifelements (12) übertragbar ist; und
- Erstes magnetisches Bewegen (104) des Bewegungsteils (14) der ersten Greifvorrichtung (10) mittels einer Magneteinrichtung (50) der Aktuierungsvorrichtung (42), um das erste Objekt mit der ersten Greifvorrichtung (10) zu greifen oder freizugeben.
